(19) Europäisches Patentamt
European Patent Office
Office européen des brevets

(11) **EP 4 425 382 A1**

(12) **EUROPEAN PATENT APPLICATION**
published in accordance with Art. 153(4) EPC

(43) Date of publication:
04.09.2024 Bulletin 2024/36

(21) Application number: 22892105.2

(22) Date of filing: 11.11.2022

(51) International Patent Classification (IPC):
**G06N 3/08** (2023.01)

(52) Cooperative Patent Classification (CPC):
**G06F 18/214; G06F 18/25; G06N 3/0464;**
**G06N 3/06; G06N 3/08; G06N 3/084; G06N 5/04**

(86) International application number:
**PCT/CN2022/131437**

(87) International publication number:
**WO 2023/083312 (19.05.2023 Gazette 2023/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 15.11.2021 CN 202111350005

(71) Applicant: **Huawei Technologies Co., Ltd.**
**Shenzhen, Guangdong 518129 (CN)**

(72) Inventors:
• YE, Deshi
  Hangzhou, Zhejiang 310027 (CN)
• CHEN, Songyang
  Hangzhou, Zhejiang 310027 (CN)
• XU, Chen
  Shenzhen, Guangdong 518129 (CN)
• LI, Rong
  Shenzhen, Guangdong 518129 (CN)

(74) Representative: **Pfenning, Meinig & Partner mbB**
**Patent- und Rechtsanwälte**
**Theresienhöhe 11a**
**80339 München (DE)**

(54) **MODEL TRAINING METHOD AND COMMUNICATION APPARATUS**

(57)    This application provides a model training method and a communication apparatus. The method includes: An $i^{th}$ device in a $k^{th}$ group of devices performs n*M times of model training, where the $i^{th}$ device completes model parameter exchange with at least one other device in the $k^{th}$ group of devices in every M times of model training, M is a quantity of devices in the $k^{th}$ group of devices, M is greater than or equal to 2, and n is an integer; and the $i^{th}$ device sends a model $M_{i,n*M}$ to a target device, where the model $M_{i,n*M}$ is a model obtained by the $i^{th}$ device by completing the n*M times of model training. According to the solutions provided in this application, a convergence speed and utilization of data and computing power in a model training process can be improved, and requirements on computing, storage, and communication capabilities of a device can be reduced.

FIG. 4

# Description

This application claims priority to Chinese Patent Application No. 202111350005.3, filed with the China National Intellectual Property Administration on November 15, 2021 and entitled "MODEL TRAINING METHOD AND COMMUNICATION APPARATUS", which is incorporated herein by reference in its entirety.

## TECHNICAL FIELD

Embodiments of this application relate to a learning method, and in particular, to a model training method and a communication apparatus.

## BACKGROUND

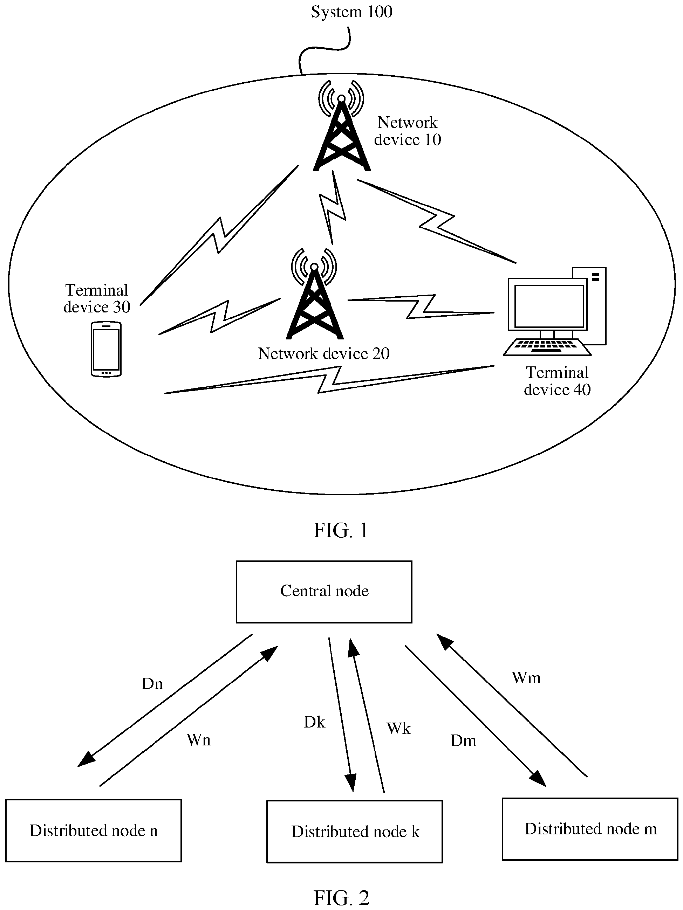

Distributed learning is a key direction of current research on artificial intelligence (artificial intelligence, AI). In distributed learning, a central node separately delivers a dataset D (including datasets $D_n$, $D_k$, $D_m$) to a plurality of distributed nodes (for example, a distributed node n, a distributed node k, and a distributed node m in FIG. 2). The plurality of distributed nodes separately perform model training by using local computing resources, and upload a trained model W (including models $W_n, W_k, W_m$) to the central node. In this learning architecture, the central node has all datasets, and the distributed nodes do not need to collect local datasets. This learning architecture uses computing capabilities of the distributed nodes to assist model training, to offload computing pressure of the central node.

In an actual scenario, data is usually collected by distributed nodes. In other words, data exists in a distributed manner. In this case, a data privacy problem is caused when the data is aggregated to the central node, and a large quantity of communication resources are used for data transmission, resulting in high communication overheads.

To resolve the problems, concepts of federated learning (federated learning, FL) and split learning (split learning) are proposed.

1. Federated learning

Federated learning enables each distributed node and a central node to collaborate with each other to efficiently complete a model learning task while ensuring user data privacy and security. In an FL framework, a dataset exists on a distributed node. In other words, the distributed node collects a local dataset, performs local training, and reports a local result (model or gradient) obtained through training to the central node. The central node does not have a dataset, is only responsible for performing fusion processing on training results of distributed nodes to obtain a global model, and delivers the global model to the distributed nodes. However, because FL periodically fuse the entire model according to a federated averaging (federated averaging, FedAvg) algorithm, a convergence speed is slow, and convergence performance is defective to some extent. In addition, because a device that performs FL needs to store and send the entire model, requirements on computing, storage, and communication capabilities of the device are high.

2. Split learning

In split learning, a model is generally divided into two parts, which are deployed on a distributed node and a central node respectively. An intermediate result inferred by a neural network is transmitted between the distributed node and the central node. Compared with federated learning, in split learning, no complete model is stored on the distributed node and the central node, which further ensures user privacy. In addition, content exchanged between the central node and the distributed node is data and a corresponding gradient, and communication overheads can be significantly reduced when a quantity of model parameters is large. However, a training process of a split learning model is serial, in other words, nodes sequentially perform update, causing low utilization of data and computing power.

## SUMMARY

Embodiments of this application provide a model training method and a communication apparatus, to improve a convergence speed and utilization of data and computing power in a model training process, and reduce requirements on computing, storage, and communication capabilities of a device.

According to a first aspect, a model training method is provided, where the method includes: An $i^{th}$ device in a $k^{th}$ group of devices performs n*M times of model training, where the $i^{th}$ device completes model parameter exchange with at least one other device in the $k^{th}$ group of devices in every M times of model training, M is a quantity of devices in the $k^{th}$ group of devices, M is greater than or equal to 2, and n is an integer; and the $i^{th}$ device sends a model $M_{i,n*M}$ to a target device, where the model $M_{i,n*M}$ is a model obtained by the $i^{th}$ device by completing the n*M times of model training.

According to the solution provided in this embodiment of this application, after performing the n*M times of model training, the $i^{th}$ device in the $k^{th}$ group of devices sends, to the target device, the model obtained after the n*M times of model training are completed, so that the target device fuses received K groups (K*M) of models. In the solution of this application, models obtained through intra-group training are fused, so that a convergence speed in a model training process can be improved. In addition, in the solution of this application, K groups of devices synchronously train the models, so that utilization of data and computing power in the model training process can be improved. Moreover, because all devices in this application perform processing or receiving and sending based on a part of a model, requirements on computing, storage, and communication capabilities of the devices can be reduced.

With reference to the first aspect, in some possible implementations, the target device is a device with highest computing power in the $k^{th}$ group of devices;

the target device is a device with a smallest communication delay in the $k^{th}$ group of devices; or
the target device is a device specified by a device other than the $k^{th}$ group of devices.

With reference to the first aspect, in some possible implementations, that an $i^{th}$ device in a $k^{th}$ group of devices performs n*M times of model training includes:

For a $j^{th}$ time of model training in the n*M times of model training, the $i^{th}$ device receives a result obtained through inference by an $(i-1)^{th}$ device from the $(i-1)^{th}$ device;
the $i^{th}$ device determines a first gradient and a second gradient based on the received result, where the first gradient is for updating a model $M_{i,j-1}$, the second gradient is for updating a model $M_{i-1,j-1}$, the model $M_{i,j-1}$ is a model obtained by the $i^{th}$ device by completing a $(j-1)^{th}$ time of model training, and the model $M_{i-1,j-1}$ is a model obtained by the $(i-1)^{th}$ device by completing the $(j-1)^{th}$ time of model training; and
the $i^{th}$ device trains the model $M_{i,j-1}$ based on the first gradient.

In the solution provided in this embodiment of this application, for the $j^{th}$ time of model training in the n*M times of model training, the $i^{th}$ device may determine the first gradient and the second gradient based on the result received from the $(i-1)^{th}$ device, and train the model $M_{i,j-1}$ based on the first gradient, so that a convergence speed in a model training process can be improved.

With reference to the first aspect, in some possible implementations, when i=M, the first gradient is determined based on the received inference result and a label received from a $1^{st}$ device; or
when i≠M, the first gradient is determined based on the second gradient transmitted by an $(i+1)^{th}$ device.

With reference to the first aspect, in some possible implementations, the method further includes:
when the $i^{th}$ device completes model parameter exchange with the at least one other device in the $k^{th}$ group of devices, the $i^{th}$ device exchanges a locally stored sample quantity with the at least one other device in the $k^{th}$ group of devices.

According to the solution provided in this embodiment of this application, when completing the model parameter exchange with the at least one other device in the $k^{th}$ group of devices, the $i^{th}$ device may further exchange the locally stored sample quantity. The $i^{th}$ device may send a sample quantity (including the locally stored sample quantity and a sample quantity obtained through exchange) to the target device, so that the target device can perform inter-group fusion on a $q^{th}$ model in each of K groups of models based on the sample quantity and according to a fusion algorithm. This can effectively improve a model generalization capability.

With reference to the first aspect, in some possible implementations, the method further includes:

For a next time of training following the n*M times of model training, the $i^{th}$ device obtains information about a model $M_r$ from the target device, where the model $M_r$ is an $r^{th}$ model obtained by the target device by performing inter-group fusion on the model $M^k_{i,n*M}$, $r \in [1, M]$, the model $M^k_{i,n*M}$ is a model obtained by the $i^{th}$ device in the $k^{th}$ group of devices by completing the n*M times of model training, i traverses from 1 to M, and k traverses from 1 to K.

According to the solution provided in this embodiment of this application, for the next time of training following the n*M times of model training, the $i^{th}$ device obtains the information about the model $M_r$ from the target device, so that accuracy of the information about the model can be ensured, thereby improving accuracy of model training.

With reference to the first aspect, in some possible implementations, the method further includes:
The $i^{th}$ device receives a selection result sent by the target device.

That the $i^{th}$ device obtains information about a model $M_r$ from the target device includes:
The $i^{th}$ device obtains the information about the model $M_r$ from the target device based on the selection result.

With reference to the first aspect, in some possible implementations, the selection result includes at least one of the following:
a selected device, a grouping status, or information about a model.

With reference to the first aspect, in some possible implementations, the information about the model includes:
a model structure of the model, a model parameter of the model, a fusion round period, and a total quantity of fusion rounds.

According to a second aspect, a model training method is provided, where the method includes: A target device receives a model $M^k_{i,n*M}$ sent by an $i^{th}$ device in a $k^{th}$ group of devices in K groups of devices, where the model $M^k_{i,n*M}$ is a model obtained by the $i^{th}$ device in the $k^{th}$ group of devices by completing n*M times of model training, a quantity of devices included in each group of devices is M, M is greater than or equal to 2, n is an integer, i traverses from 1 to M, and k traverses from 1 to K; and

the target device performs inter-group fusion on K groups of models, where the K groups of models include K mod-

els $M^k_{i,n*M}$ .

In the solution provided in this embodiment of this application, the target device receives the K groups (that is, K*M) of models, and the target device may fuse the K groups of models. In the solution of this application, models obtained through intra-group training are fused, so that a convergence speed in a model training process can be improved. Moreover, because the target device in this application performs processing or receiving and sending based on a part of a model, requirements on computing, storage, and communication capabilities of the target device can be reduced.

With reference to the second aspect, in some possible implementations, the target device is a device with highest computing power in the K group of devices;

the target device is a device with a smallest communication delay in the K group of devices; or
the target device is a device specified by a device other than the K group of devices.

With reference to the second aspect, in some possible implementations, that the target device performs fusion on K groups of models includes:
The target device performs inter-group fusion on a $q^{th}$ model in each of the K groups of models according to a fusion algorithm, where $q \in [1, M]$.

In the solution provided in this embodiment of this application, the target device performs inter-group fusion on the $q^{th}$ model in each of the K groups of models to obtain a global model. Because in the solution of this application, models obtained through intra-group training are fused, a convergence speed in a model training process can be further improved.

With reference to the second aspect, in some possible implementations, the method further includes:
The target device receives a sample quantity sent by the $i^{th}$ device in the $k^{th}$ group of devices, where the sample quantity includes a sample quantity currently stored in the $i^{th}$ device and a sample quantity obtained by exchanging with at least one other device in the $k^{th}$ group of devices.

That the target device performs inter-group fusion on a $q^{th}$ model in each of the K groups of models according to a fusion algorithm includes:
The target device performs inter-group fusion on the $q^{th}$ model in each of the K groups of models based on the sample quantity and according to the fusion algorithm.

According to the solution provided in this embodiment of this application, the target device may perform inter-group fusion on the $q^{th}$ model in each of the K groups of models based on the received sample quantity and according to the fusion algorithm. Because the sample quantity received by the target device includes a sample quantity locally stored in the $i^{th}$ device and the sample quantity obtained by exchanging with the at least one other device in the $k^{th}$ group of devices, a model generalization capability can be effectively improved.

With reference to the second aspect, in some possible implementations, the method further includes:

The target device receives status information reported by N devices, where the N devices include M devices included in each group of devices in the K groups of devices;
the target device selects, based on the status information, the M devices included in each group of devices in the K groups of devices from the N devices; and
the target device broadcasts a selection result to the M devices included in each group of devices in the K groups of devices.

With reference to the second aspect, in some possible implementations, the selection result includes at least one of the following:
a selected device, a grouping status, or information about a model.

With reference to the second aspect, in some possible implementations, the information about the model includes:
a model structure of the model, a model parameter of the model, a fusion round period, and a total quantity of fusion rounds.

With reference to the second aspect, in some possible implementations, the status information includes at least one of the following information:
device computing power, a storage capability, resource usage, an adjacent matrix, and a hyperparameter.

According to a third aspect, a model training method is provided, where the method includes: M devices in a $k^{th}$ group of devices update M models $M_{j-1}$ based on information about the M models $M_{j-1}$ to obtain M models $M_j$, where j is an integer greater than or equal to 1;

rotate model parameters of the M devices;
update the M models $M_j$ based on M devices obtained through the rotation, to obtain M models $M_{j+1}$; and
when j+1=n*M, and n is a positive integer, the M devices send M models $M_{n*M}$ to a target device.

In the solution provided in this embodiment of this application, after training the M models based on the information about the M models $M_{j-1}$, the M devices included in each group of devices in the K groups of devices rotate the model parameters of the M devices, and update the M models $M_j$ based on the M devices obtained through the rotation. When j + 1 =n *M, the M devices send the M models $M_{n*M}$ to the target device, so that the target device performs interfusion on the K groups of models. In the solution of this application, models obtained through intra-group training are fused, so that a convergence speed in a model training process can be improved. In addition, in the solution of this application, K groups of devices synchronously train the models, so that utilization of data and computing power in the model training process can be improved. Moreover, because all devices in this application perform processing or receiving and sending based on a part of a model, requirements on computing, storage, and communication capabilities of the devices can be reduced.

With reference to the third aspect, in some possible implementations, the target device is a device with highest computing power in the M devices;

the target device is a device with a smallest communication delay in the M devices; or
the target device is a device specified by a device other than the M devices.

With reference to the third aspect, in some possible implementations, that M devices in a $k^{th}$ group of devices update M models $M_{j-1}$ based on information about the M models $M_{j-1}$ includes:

A $1^{st}$ device in the $k^{th}$ group of devices performs inference on a model $M_{1,j-1}$ based on locally stored data, where the model $M_{i,j-1}$ represents a model obtained by the $1^{st}$ device by completing a $(j-1)^{th}$ time of model training;

an $i^{th}$ device in the $k^{th}$ group of devices obtains a result of inference performed by an $(i-1)^{th}$ device, where $i \in (1, M]$ ;
the $i^{th}$ device determines a first gradient and a second gradient based on the obtained result, where the first gradient is for updating a model $M_{i,j-1}$, the second gradient is for updating a model $M_{i-1,j-1}$, the model $M_{i,j-1}$ is a model obtained by the $i^{th}$ device by completing the $(j-1)^{th}$ time of model training, and the model $M_{i-1,j-1}$ is a model obtained by the $(i-1)^{th}$ device by completing the $(j-1)^{th}$ time of model training; and the $i^{th}$ device updates the model $M_{i,j-1}$ based on the first gradient.

In the solution provided in this embodiment of this application, the $i^{th}$ device in the $k^{th}$ group of devices may determine the first gradient and the second gradient based on the result received from the $(i-1)^{th}$ device, and train and update the model $M_{i,j-1}$ based on the first gradient, so that a convergence speed in a model training process can be improved.

With reference to the third aspect, in some possible implementations, when i=M, the first gradient is determined based on the obtained result and a label received from the $1^{st}$ device; or
when i≠M, the first gradient is determined based on the second gradient transmitted by an $(i+1)^{th}$ device.

With reference to the third aspect, in some possible implementations, the rotating model parameters of the M devices includes:
sequentially exchanging a model parameter of the $i^{th}$ device in the M devices and a model parameter of the $1^{st}$ device.

According to the solution provided in this embodiment of this application, the model parameter of the $i^{th}$ device in the M devices and the model parameter of the $1^{st}$ device are sequentially exchanged, and the M models $M_j$ are updated based on the M devices obtained through the rotation, so that local data utilization and privacy of a device can be improved.

With reference to the third aspect, in some possible implementations, the method further includes:
sequentially exchanging a sample quantity locally stored in the $i^{th}$ device in the M devices and a sample quantity locally stored in the $1^{st}$ device.

According to the solution provided in this embodiment of this application, the sample quantity locally stored in the $i^{th}$ device and the sample quantity locally stored in the $1^{st}$ device are sequentially exchanged, so that the target device can perform inter-group fusion on a $q^{th}$ model in each of K groups of models based on the sample quantity and according to a fusion algorithm. This can effectively improve a model generalization capability.

With reference to the third aspect, in some possible implementations, the method further includes:
For a next time of training following the n*M times of model training, the M devices obtain information about a model $M_{\langle r \rangle}$ from the target device, where the model $M_{\langle r \rangle}$ is an $r^{th}$ model obtained by the target device by performing inter-group fusion on the model $M^k_{n*M}$ , r traverses from 1 to M, the model $M^k_{n*M}$ is a model obtained by the M devices in the $k^{th}$ group of devices by completing an $(n*M)^{th}$ times of model training, i traverses from 1 to M, and k traverses from 1 to K.

According to the solution provided in this embodiment of this application, for the next time of training following the n*M times of model training, the M devices obtain the information about the model $M_{n*M}$ from the target device, so that accuracy of the information about the model can be ensured, thereby improving accuracy of model training.

With reference to the third aspect, in some possible implementations, the method further includes:
The M devices receive a selection result sent by the target device.

That the M devices obtain information about a model $M_{\langle r \rangle}$ from the target device includes:
The M devices correspondingly obtain the information about the model $M_{\langle r \rangle}$ from the target device based on the selection result.

With reference to the third aspect, in some possible implementations, the selection result includes at least one of the following:

a selected device, a grouping status, or information about a model.

With reference to the third aspect, in some possible implementations, the information about the model includes:

a model structure of the model, a model parameter of the model, a fusion round period, and a total quantity of fusion rounds.

According to a fourth aspect, a model training method is provided, where the method includes: A target device receives M models $M_{n*M}^{k}$ sent by M devices in a $k^{th}$ group of devices in K groups of devices, where the model $M_{n*M}^{k}$ is a model obtained by the M devices in the $k^{th}$ group of devices by completing an $(n*M)^{th}$ time of model training, M is greater than or equal to 2, and k traverses from 1 to K; and

the target device performs inter-group fusion on K groups of models, where the K groups of models include the M models $M_{n*M}^{k}$.

In the solution provided in this embodiment of this application, the target device receives M models $M_{n*M}$ sent by M devices included in each group of devices in the K groups of devices, and may perform inter-group fusion on the K groups of models. In the solution of this application, models obtained through intra-group training are fused, so that a convergence speed in a model training process can be improved. Moreover, because the target device in this application performs processing or receiving and sending based on a part of a model, requirements on computing, storage, and communication capabilities of the target device can be reduced.

With reference to the fourth aspect, in some possible implementations, the target device is a device with highest computing power in the M devices;

the target device is a device with a smallest communication delay in the M devices; or
the target device is a device specified by a device other than the M devices.

With reference to the fourth aspect, in some possible implementations, that the target device performs fusion on K groups of models includes:

The target device performs inter-group fusion on a $q^{th}$ model in each of the K groups of models according to a fusion algorithm, where q e [1,M].

With reference to the fourth aspect, in some possible implementations, the method further includes:
The target device receives a sample quantity sent by the $k^{th}$ group of devices, where the sample quantity includes a sample quantity currently stored in the $k^{th}$ group of devices and a sample quantity obtained by exchanging with at least one other device in the $k^{th}$ group of devices.

That the target device performs inter-group fusion on a $q^{th}$ model in each of the K groups of models according to a fusion algorithm includes:
The target device performs inter-group fusion on the $q^{th}$ model in each of the K groups of models based on the sample quantity and according to the fusion algorithm.

According to the solution provided in this embodiment of this application, the target device may perform inter-group fusion on the $q^{th}$ model in each of the K groups of models based on the received sample quantity and according to the fusion algorithm. Because the sample quantity received by the target device includes a sample quantity locally stored in the $i^{th}$ device and the sample quantity obtained by exchanging with the at least one other device in the $k^{th}$ group of devices, a model generalization capability can be effectively improved.

With reference to the fourth aspect, in some possible implementations, the method further includes:

The target device receives status information reported by N devices, where the N devices include M devices included in each group of devices in the K groups of devices;
the target device selects, based on the status information, the M devices included in each group of devices in the K groups of devices from the N devices; and
the target device broadcasts a selection result to the M devices included in each group of devices in the K groups of devices.

With reference to the fourth aspect, in some possible implementations, the selection result includes at least one of the following:
a selected device, a grouping status, or information about a model.

With reference to the fourth aspect, in some possible implementations, the information about the model includes:
a model structure of the model, a model parameter of the model, a fusion round period, and a total quantity of fusion rounds.

With reference to the fourth aspect, in some possible implementations, the status information includes at least one of the following information:
device computing power, a storage capability, resource usage, an adjacent matrix, and a hyperparameter.

According to a fifth aspect, a communication apparatus is provided. For beneficial effects, refer to the descriptions in the first aspect. Details are not described herein again. The communication apparatus has a function of implementing behavior in the method embodiment in the first aspect. The function may be implemented by hardware, or may be implemented by hardware executing corresponding software. The hardware includes one or more modules corresponding to the foregoing function. In a possible design, the communication apparatus includes: a processing module, configured to perform n*M times of model training, where the $i^{th}$ device completes model parameter exchange with at least one other device in the $k^{th}$ group of devices in every M times of model training, M is a quantity of devices in the $k^{th}$ group of devices, M is greater than or equal to 2, and n is an integer; and a transceiver module, configured to send a model $M_{i,n*M}$ to a target device, where the model $M_{i,n*M}$ is a model obtained by the $i^{th}$ device by completing the n*M times of model training. These modules may perform corresponding functions in the method example in the first aspect. For details, refer to the detailed descriptions in the method example. Details are not described herein again.

According to a sixth aspect, a communication apparatus is provided. For beneficial effects, refer to the descriptions in the second aspect. Details are not described herein again. The communication apparatus has a function of implementing behavior in the method example of the second aspect. The function may be implemented by hardware, or may be implemented by hardware executing corresponding software. The hardware or the software includes one or more modules corresponding to the foregoing function. In a possible design, the communication apparatus includes: a transceiver module, configured to receive a model $M^{k}_{i,n*M}$ sent by an $i^{th}$ device in a $k^{th}$ group of devices in K groups of devices, where the model $M^{k}_{i,n*M}$ is a model obtained by the $i^{th}$ device in the $k^{th}$ group of devices by completing n*M times of model training, a quantity of devices included in each group of devices is M, M is greater than or equal to 2, n is an integer, i traverses from 1 to M, and k traverses from 1 to K; and a processing module, configured to perform inter-group fusion on K groups of models, where the K groups of models include K models $M^{k}_{i,n*M}$.

According to a seventh aspect, a communication apparatus is provided. The communication apparatus may be the $i^{th}$ device in the foregoing method embodiments, or may be a chip disposed in the $i^{th}$ device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the $i^{th}$ device in the foregoing method embodiments.

Optionally, in some embodiments, the $i^{th}$ device may be a terminal device or a network device.

According to an eighth aspect, a communication apparatus is provided. The communication apparatus may be the target device in the foregoing method embodiments, or may be a chip disposed in the target device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the target device in the foregoing method embodiments.

Optionally, in some embodiments, the target device may be a terminal device or a network device.

According to a ninth aspect, a computer program product is provided. The computer program product includes computer program code. When the computer program code is run, the method performed by a terminal device in the foregoing aspects is performed.

According to a tenth aspect, a computer program product is provided. The computer program product includes computer program code. When the computer program code is run, the method performed by a network device in the foregoing aspects is performed.

According to an eleventh aspect, this application provides a chip system. The chip system includes a processor, configured to implement a function of a terminal device in the methods in the foregoing aspects. In a possible design, the chip system further includes a memory, configured to store program instructions and/or data. The chip system may include a chip, or may include a chip and another discrete component.

According to a twelfth aspect, this application provides a chip system. The chip system includes a processor, configured to implement a function of a network device in the methods in the foregoing aspects. In a possible design, the chip system further includes a memory, configured to store program instructions and/or data. The chip system may include a chip, or may include a chip and another discrete component.

According to a thirteenth aspect, this application provides a computer-readable storage medium. The computer-readable storage medium stores a computer program. When the computer program is run, the method performed by a terminal device in the foregoing aspects is implemented.

According to a fourteenth aspect, this application provides a computer-readable storage medium. The computer-readable storage medium stores a computer program. When the computer program is run, the method performed by a network device in the foregoing aspects is implemented.

**BRIEF DESCRIPTION OF DRAWINGS**

FIG. 1 is a schematic diagram based on a communication system according to an embodiment of this application;
FIG. 2 is a schematic diagram of distributed learning according to an embodiment of this application;
FIG. 3 is a schematic diagram of distributed learning according to another embodiment of this application;

FIG. 4 is a schematic diagram of a model training method according to an embodiment of this application;

FIG. 5 is a schematic diagram of a fully-connected neural network according to an embodiment of this application;

FIG. 6 is a schematic diagram of loss function optimization according to an embodiment of this application;

FIG. 7 is a schematic diagram of gradient backpropagation according to an embodiment of this application;

FIG. 8 is a schematic diagram of devices included in a plurality of groups of devices according to an embodiment of this application;

FIG. 9 is a schematic diagram of training a model by a device based on a rotation sequence according to an embodiment of this application;

FIG. 10 is another schematic diagram of training a model by a device based on a rotation sequence according to an embodiment of this application;

FIG. 11 is a schematic diagram of accuracy comparison according to an embodiment of this application;

FIG. 12 is a schematic diagram of a method for interaction between N devices and a target device according to an embodiment of this application;

FIG. 13 is a schematic diagram of a model training method according to another embodiment of this application;

FIG. 14 is a schematic diagram of a structure of a communication apparatus according to an embodiment of this application; and

FIG. 15 is a schematic diagram of a structure of another communication apparatus according to an embodiment of this application.

## DESCRIPTION OF EMBODIMENTS

The following describes technical solutions of embodiments in this application with reference to accompanying drawings.

The technical solutions of embodiments of this application may be applied to various communication systems, for example, a narrowband internet of things (narrow band-internet of things, NB-IoT) system, a global system for mobile communications (global system for mobile communications, GSM) system, an enhanced data rate for global system for mobile communications evolution (enhanced data rate for GSM evolution, EDGE) system, a code division multiple access (code division multiple access, CDMA) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, a new radio (new radio, NR) system, or the like.

FIG. 1 is a schematic diagram of a wireless communication system 100 applicable to embodiments of this application. As shown in FIG. 1, the wireless communication system 100 may include one or more network devices, for example, a network device 10 and a network device 20 shown in FIG. 1. The wireless communication system 100 may further include one or more terminal devices (which may also be referred to as user equipment (user equipment, UE)), for example, a terminal device 30 and a terminal device 40 shown in FIG. 1. The four devices: the network device 10, the network device 20, the terminal device 30, and the terminal device 40, may communicate with each other.

It should be understood that FIG. 1 is merely a schematic diagram. The communication system may further include another network device, for example, may further include a core network device, a wireless relay device, and a wireless backhaul device, which are not shown in FIG. 1. Quantities of network devices and terminal devices included in the mobile communication system are not limited in embodiments of this application.

The terminal device 30 or the terminal device 40 in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile network (public land mobile network, PLMN). In this application, the terminal device and a chip that can be used in the terminal device are collectively referred to as a terminal device. It should be understood that a specific technology and a specific device form used for the terminal device are not limited in embodiments of this application.

The network device 10 or the network device 20 in embodiments of this application may be a device configured to communicate with a terminal device. The network device may be a base transceiver station (Base Transceiver Station, BTS) in a GSM system or a CDMA system, may be a NodeB (NodeB, NB) in a WCDMA system, may be an evolved NodeB (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like, may be a gNB in an NR system, or may be a component or a part of a device that constitutes a base station, for example, a central unit (central unit, CU), a distributed unit (distributed unit, DU), or a baseband unit (baseband unit, BBU). It should be understood that a specific technology and a specific device form used for the network device are not limited in embodiments of this application. In this application, the network device may be the network device, or may be a chip used in the network device to complete a wireless communication processing function.

It should be understood that, in embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include, but is not limited to, a magnetic storage device (for example, a hard disk, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive).

In addition, various storage media described in this specification may indicate one or more devices and/or other machine-readable media that are configured to store information. The term "machine-readable storage media" may include but is not limited to a radio channel, and various other media that can store, include, and/or carry instructions and/or data.

It should be understood that, division into manners, cases, categories, and embodiments in embodiments of this application is merely for ease of description, and should not constitute a special limitation. Features in various manners, categories, cases, and embodiments may be combined without contradiction.

It should be further understood that sequence numbers of the processes do not mean execution sequences in embodiments of this application. The execution sequences of the processes need be determined based on functions and internal logic of the processes, and should not constitute any limitation on implementation processes of embodiments of this application.

It should be noted that, in embodiments of this application, "presetting", "predefining", "preconfiguring", or the like may be implemented by pre-storing corresponding code or a corresponding table in a device (for example, including a terminal device and a network device), or in another manner that may indicate related information. A specific implementation of thereof is not limited in this application, for example, preconfigured information in embodiments of this application.

With advent of the big data era, each device (including a terminal device and a network device) generates a large amount of raw data in various forms every day. The data will be generated in a form of "islands" and exist in every corner of the world. Traditional centralized learning requires that each edge device transmits local data to a central server, and the central server uses the collected data to train and learn models. However, with changing of the times, this architecture is gradually restricted by the following factors:

(1) Edge devices are widely distributed in various regions and corners of the world. These devices will continuously generate and accumulate massive amounts of raw data at a fast speed. If the central end needs to collect raw data from all edge devices, a huge communication loss is caused and a computing power requirement is generated.
(2) As actual scenarios in real life become more complex, more and more learning tasks require that the edge device can make timely and effective decisions and feedback. Traditional centralized learning involves the upload of a large amount of data, which causes a large delay. As a result, the centralized learning cannot meet real-time requirements of actual task scenarios.

(3) Considering industry competition, user privacy security, and complex administrative procedures, centralized data integration will face increasing obstacles. Therefore, for system deployment, data is tended to be locally stored, and local computing of a model is completed by the edge device on its own.

FIG. 2 is a schematic diagram of distributed learning according to an embodiment of this application.

Refer to FIG. 2. It can be learned that, in distributed learning, a central node separately delivers a dataset D (including datasets $D_n$, $D_k$, $D_m$ ) to a plurality of distributed nodes (for example, a distributed node n, a distributed node k, and a distributed node m in FIG. 2). The plurality of distributed nodes separately perform model training by using local computing resources, and upload a trained model W (including models $W_n, W_k, W_m$) to the central node. In this learning architecture, the central node has all datasets, and the distributed nodes do not need to collect local datasets. This learning architecture uses computing capabilities of the distributed nodes to assist model training, to offload computing pressure of the central node.

In an actual scenario, data is usually collected by distributed nodes. In other words, data exists in a distributed manner. In this case, a data privacy problem is caused when the data is aggregated to the central node, and a large quantity of communication resources are used for data transmission, resulting in high communication overheads.

To solve this problem, concepts of federated learning and split learning are proposed.

1. Federated learning

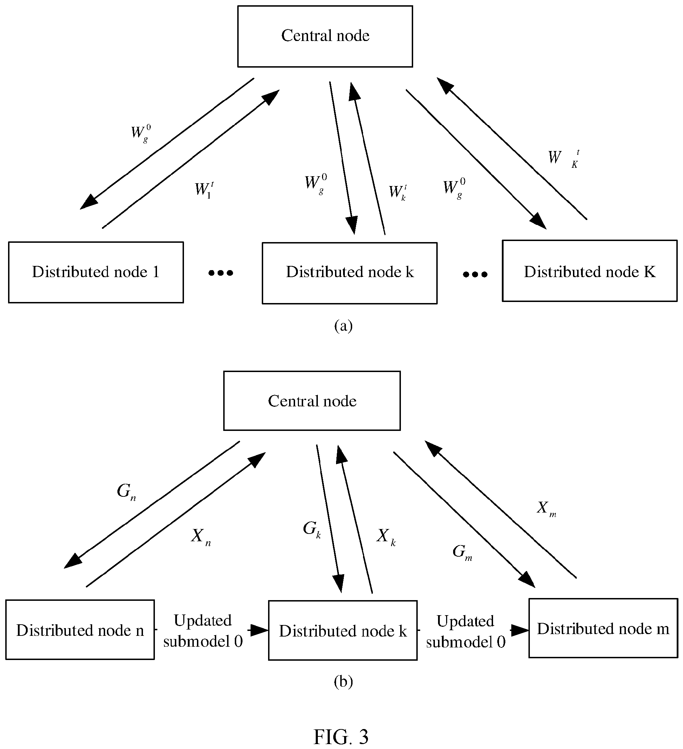

Federated learning enables each distributed node and a central node to collaborate with each other to efficiently complete a model learning task while ensuring user data privacy and security. As shown in (a) in FIG. 3, an algorithm procedure of FL is roughly as follows:

(1) A central node initializes a to-be-trained model $W_g^0$ , and broadcasts the to-be-trained model to all distributed nodes, for example, distributed nodes 1, ..., k, ..., and K in the figure.

(2) A $k^{th}$ distributed node is used as an example. In a $(t^{th}{\in}[1, T])^{th}$ round, the distributed node k trains a received global model $W_g^{t-1}$ based on a local dataset $D_k$ to obtain a local training result $W_k^t$ , and reports the local training result to the central node.

(3) The central node summarizes and collects local training results from all (or some) distributed nodes. It is assumed that a set of clients for uploading local models in the $t^{th}$ round is $S^t$. The central node performs weighted averaging by using a sample quantity of a corresponding distributed node as a weight to obtain a new global model. A specific update rule is

$$W_g^t = \sum_{k \in S^t} \frac{D'_k W_k^t}{\sum_{k \in S^t} D'_k}, k \in [1, K]$$

, where $D'_k$ represents an amount of data included in the dataset $D_k$. Then, the central node broadcasts the global model $W_g^t$ of a latest version to all distributed nodes for a new round of training.

(4) Steps (2) and (3) are repeated until the model is finally converged or a quantity of training rounds reaches an upper limit.

In addition to reporting the local model $W_k^t$ to the central node, the distributed node k may further report a trained local gradient $g_k^t$ . The central node averages local gradients, and updates the global model based on a direction of an average gradient.

Therefore, in an FL framework, a dataset exists on a distributed node. In other words, the distributed node collects a local dataset, performs local training, and reports a local result (model or gradient) obtained through training to the central node. The central node does not have a dataset, is only responsible for performing fusion processing on training results of distributed nodes to obtain a global model, and delivers the global model to the distributed nodes. However, because FL periodically fuse the entire model according to a federated averaging algorithm, a convergence speed is slow, and convergence performance is defective to some extent. In addition, because a device that performs FL needs to store and send the entire model, requirements on computing, storage, and communication capabilities of the device are high.

2. Split learning

In split learning, a model is generally divided into two parts, which are deployed on a distributed node and a central node respectively. An intermediate result inferred by a neural network is transmitted between the distributed node and the central node. As shown in (b) in FIG. 3, an algorithm procedure of FL is roughly as follows:

(1) A central node splits a model into two parts: a submodel 0 and a submodel 1. An input layer of the model is the submodel 0, and an output layer is the submodel 1.

(2) The central node delivers the submodel 0 to a distributed node n.

(3) The distributed node n uses local data for inference and sends an output $X_n$ of the submodel 0 to the central node.

(4) The central node receives $X_n$, inputs the submodel 1, and obtains an output result $X'_n$ of the model. The central node updates the submodel 1 based on the output result $X'_n$ and a label, and reversely transmits an intermediate gradient $G_n$ to the distributed node n.

(5) The distributed node n receives $G_n$ and updates the submodel 0.

(6) The distributed node n sends, to a distributed node k, a submodel 0 obtained through update by the distributed node n.

(7) The distributed node k repeats the foregoing steps (3) to (6), where the distributed node n is replaced with the distributed node k.

(8) The distributed node k sends, to a distributed node m, a submodel 0 obtained through update by the distributed node k, and repeats training of the distributed node m.

Compared with federated learning, in split learning, no complete model is stored on the distributed node and the central node, which further ensures user privacy. In addition, content exchanged between the central node and the distributed node is data and a corresponding gradient, and communication overheads can be significantly reduced when a quantity of model parameters is large. However, a training process of a split learning model is serial, in other words, nodes n, k, and m sequentially perform update, causing low utilization of data and computing power.

Therefore, embodiments of this application provide a model training method, to improve a convergence speed and utilization of data and computing power in a model training process, and reduce requirements on computing, storage, and communication capabilities of a device.

The solution of this application should be applied to a scenario including a plurality of groups of devices and a target device. Assuming that the plurality of groups of devices include K groups of devices, and each group of devices in the K groups of devices includes M devices, the M devices included in each group of devices in the K groups of devices correspondingly obtain information about M submodels, and perform, based on the information about the M submodels, a plurality of times of intra-group training on the M submodels, to obtain submodels that are updated after the plurality of times of intra-group training. The M devices included in each group of devices send, to the target device, the M submodels obtained through the training and update. After receiving K*M submodels, the target device may perform inter-group fusion on the K groups (that is, K*M) submodels.

The following describes the solutions of this application by using an $i^{th}$ device in a $k^{th}$ group of devices in the K groups of devices and the target device as an example.

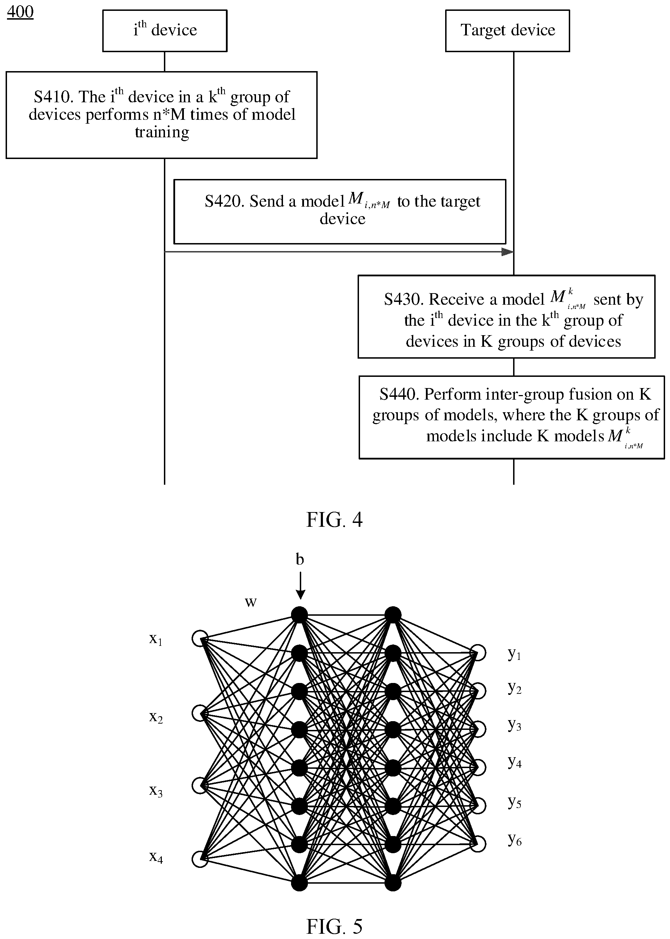

FIG. 4 is a schematic diagram of a model training method 400 according to an embodiment of this application. The method 400 may include but is not limited to steps S410 to S440.

S410. An $i^{th}$ device in a $k^{th}$ group of devices performs n*M times of model training, where the $i^{th}$ device completes model parameter exchange with at least one other device in the $k^{th}$ group of devices in every M times of model training, M is a quantity of devices in the $k^{th}$ group of devices, M is greater than or equal to 2, and n is an integer.

The $k^{th}$ group of devices in this embodiment of this application includes M devices. The M devices may be all terminal devices, or may be all network devices, or may include some terminal devices and some network devices. This is not limited.

In this embodiment of this application, the $i^{th}$ device may be any device in the M devices included in the $k^{th}$ group of devices. The $i^{th}$ device performs the n*M times of model training. In every M times of model training, the $i^{th}$ device completes the model parameter exchange with the at least one other device in the $k^{th}$ group of devices.

For example, it is assumed that the $k^{th}$ group of devices includes four devices: a device 0, a device 1, a device 2, and a device 3. For example, for the device 0, n*4 times of model training are performed. In every four times of model training, the device 0 may complete model parameter exchange with at least one of the other three devices (the device 1, the device 2, and the device 3). In other words, in every four times of model training, the device 0 may complete model parameter exchange with the device 1, the device 0 may complete model parameter exchange with the device 1 and the device 2, or the device 0 may complete model parameter exchange with the device 1, the device 2, and the device 3. Details are not described again.

In this embodiment of this application, that the $i^{th}$ device completes model parameter exchange with at least one other device in the $k^{th}$ group of devices in every M times of model training may be understood as follows: Assuming that n=3 and M=4, in the $1^{st}$ to the $4^{th}$ times model training, the $i^{th}$ device completes model parameter exchange with at least one other device in the $k^{th}$ group of devices. In the $5^{th}$ to the $8^{th}$ times of model training, the $i^{th}$ device completes model parameter exchange with at least one other device in the $k^{th}$ group of devices. In the $9^{th}$ to the $12^{th}$ times of model training, the $i^{th}$ device completes model parameter exchange with at least one other device in the $k^{th}$ group of devices.

S420. The $i^{th}$ device sends a model $M_{i,n*M}$ to a target device, where the model $M_{i,n*M}$ is a model obtained by the $i^{th}$ device by completing the n*M times of model training.

Optionally, in some embodiments, the target device may be a device in the $k^{th}$ groups of devices, or the target device may be a device other than the k groups of devices. This is not limited.

As described above, the $i^{th}$ device in this embodiment of this application may be any device in the $k^{th}$ group of devices. The $i^{th}$ device sends the model $M_{i,n*M}$ to the target device, and the model sent by the $i^{th}$ device to the target device is the model obtained by the $i^{th}$ device by completing the n*M times of model training.

For example, it is still assumed that the $k^{th}$ group of devices includes four devices: a device 0, a device 1, a device 2, and a device 3. The device 0 is used as an example. If the device 0 performs 3*4 times of model training, the device 0 sends, to the target device, a model obtained after the 3*4 times of model training are completed. For a specific training process, refer to the following content.

S430. The target device receives the model

$$M^{k}_{i,n*M}$$ sent by the $i^{th}$ device in the $k^{th}$ group of devices in K groups of devices, where the model $M^{k}_{i,n*M}$ is the model obtained by the $i^{th}$ device in the $k^{th}$ group of devices by completing the n*M times of model training, a quantity of devices included in each group of devices is M, M is greater than or equal to 2, n is an integer, i traverses from 1 to M, and k traverses from 1 to K. The target device is a device in the K groups of devices, or a device other than the K groups of devices.

In this embodiment of this application, k traverses from 1 to K, and i traverses from 1 to M. In other words, the target device receives a model that is obtained after the n*M times of model training are completed and that is sent by each device in each of the K groups of devices.

For example, in this embodiment of this application, it is assumed that K is 3 and M is 4. For a first group of devices, four devices included in the first group of devices send four models obtained by the four devices by performing n*M times of training to the target device. For a second group of devices, four devices included in the second group of devices send four models obtained by the four devices by performing n*M times of training to the target device. For a third group of devices, four devices included in the third group of devices send four models obtained by the four devices by performing n*M times of training to the target device. Therefore, the target device receives 12 models, and the 12 models are sent by the 12 devices included in the three groups of devices.

The target device in this embodiment of this application may be a terminal device, or may be a network device. If the K groups of devices are terminal devices, the target device may be a device with highest computing power in the K groups of terminal devices, may be a device with a smallest communication delay in the K groups of terminal devices, may be a device other than the K groups of terminal devices, for example, another terminal device or a network device, or may be a device specified by the device other than the K groups of terminal devices, for example, a device specified by the network device or the another terminal device (the specified device may be a device in the K groups of devices, or may be a device other than the K groups of devices).

If the K groups of devices are network devices, the target device may be a device with highest computing power in the K groups of network devices, may be a device with a smallest communication delay in the K groups of network devices, may be a device other than the K groups of network devices, for example, another network device or a terminal device, or may be a device specified by the device other than the K groups of network devices, for example, a device specified by the terminal device or the another network device (the specified device may be a device in the K groups of devices, or may be a device other than the K groups of devices).

It should be understood that there may be one or more target devices in this embodiment of this application. This is not limited.

For example, it is assumed that the $k^{th}$ group of devices includes four devices: a device 0, a device 1, a device 2, and a device 3. If a communication delay between the device 0 and a target device 2 and a communication delay between the device 1 and the target device 2 are greater than a communication delay between the device 0 and a target device 1 and a communication delay between the device 1 and the target device 1, and a communication delay between the device 2 and the target device 1 and a communication delay between the device 3 and the target device 1 are greater than a communication delay between the device 2 and the target device 2 and a communication delay between the device 3 and the target device 2, the device 0 and the device 1 may separately send, to the target device 1, models obtained by the device 0 and the device 1 through the n*M times of training, and the device 2 and the device 3 may separately send, to the target device 2, models obtained by the device 2 and the device 3 through the n*M times of training. In a subsequent fusion process, the target device 1 may fuse the models received from the device 0 and the device 1, and the target device 2 may fuse the models received from the device 2 and the device 3. After the fusion is completed, the target device 1 and the target device 2 may synchronize the fused models, to facilitate a next time of model training.

S440. The target device performs inter-group fusion on K groups of models, where the K groups of models include the K models $M^{k}_{i,n*M}$ .

In step S430, the target device receives the model that is obtained after the n*M times of model training are completed and that is sent by each device in each of the K groups of devices. In other words, the target device receives the K groups of M models. Therefore, for same submodels, the target device may perform inter-group fusion on the submodels. After the target device performs inter-group fusion on the received models, a device included in each group of devices in the K groups of devices may correspondingly obtain a fused model from the target device again.

For example, it is still assumed that K is 3 and M is 4. The target device receives four submodels sent by a first group of devices after completing n*4 times of model training: a submodel $0^1$, a submodel $1^1$, a submodel $2^1$, and a submodel $3^1$, respectively. The target device receives four submodels sent by a second group of devices after completing n*4 times of model training: a submodel $0^2$, a submodel $1^2$, a submodel $2^2$, and a submodel $3^2$, respectively. The target device receives four submodels sent by a third group of devices after completing n*4 times of model training: a submodel $0^3$, a submodel $1^3$, a submodel $2^3$, and a submodel $3^3$, respectively. Therefore, the target device may fuse the received submodels 0 (including the submodel $0^1$, the submodel $0^2$, and the submodel $0^3$), fuse the received submodels 1 (including the submodel $1^1$, the submodel $1^2$, and the submodel $1^3$), fuse the received submodels 2 (including the submodel $2^1$, the submodel $2^2$, and the submodel $2^3$), and fuse the received submodels 3 (including the submodel $3^1$, the submodel $3^2$, and the submodel $3^3$). After the target device fuses the received submodels, four submodels (including a fused submodel 0, a fused submodel 1, a fused submodel 2, and a fused submodel 3) are obtained. Four devices included in each of the three groups of devices may correspondingly obtain the fused submodel again. For details, refer to the following descriptions about re-obtaining a fused model.

It should be noted that, in some embodiments, if the target device does not receive, within a specified time threshold (or a preset time threshold), all models sent by each group of devices in the K groups of devices, the target device may perform inter-group fusion on the received models.

For example, it is still assumed that K is 3 and M is 4. Within the specified time threshold (or the preset time threshold), the target device receives four submodels sent by a first group of devices after completing n*4 times of model training: a submodel $0^1$, a submodel $1^1$, a submodel $2^1$, and a submodel $3^1$, respectively. The target device receives four submodels sent by a second group of devices after completing n*4 times of model training: a submodel $0^2$, a submodel $1^2$, a submodel $2^2$, and a submodel $3^2$, respectively. The target device receives submodels sent by some devices in a third group of devices after completing n*4 times of model training: a submodel $0^3$ and a submodel 1', respectively. In this case, the target device may fuse the received submodels, to be specific, fuse the received submodels 0 (including the submodel $0^1$, the submodel $0^2$, and the submodel $0^3$), fuse the received submodels 1 (including the submodel $1^1$, the submodel $1^2$, and the submodel $1^3$), fuse the received submodels 2 (including the submodel $2^1$ and the submodel $2^2$), and fuse the received submodels 3 (including the submodel $3^1$ and the submodel $3^2$).

It should be further noted that each group of models in the K groups of models in this embodiment of this application includes M models. As shown in the foregoing example, each of the three groups of models includes four submodels. For any group of models, four submodels included in the group of models form a global model. In other words, each device in the $k^{th}$ group of devices receives or sends a partial model of the global model, and processes the partial model.

According to the solution provided in this embodiment of this application, after performing the n*M times of model training, the $i^{th}$ device in the $k^{th}$ group of devices sends, to the target device, the model obtained after the n*M times of model training are completed. For the target device, the target device receives K groups of (that is, K*M) models, and the target device may fuse the K groups of models. In the solution of this application, models obtained through intra-group training are fused, so that a convergence speed in a model training process can be improved. In addition, in the solution of this application, K groups of devices synchronously train the models, so that utilization of data and computing power in the model training process can be improved. Moreover, because all devices in this application perform processing or receiving and sending based on a part of a model, requirements on computing, storage, and communication capabilities of the devices can be reduced.

For ease of understanding the solutions of this application, the following first briefly describes supervised learning applied to this application.

The objective of supervised learning is to learn mapping between an input (data) and an output (a label) in a given training set (including a plurality of pairs of inputs and outputs). In addition, it is expected that the mapping can be further used for data outside the training set. The training set is a set of correct input and output pairs.

A fully-connected neural network is used as an example. FIG. 5 is a schematic diagram of the fully-connected neural network according to an embodiment of this application. The fully-connected neural network is also referred to as a multi-layer perceptron (multi-layer perceptron, MLP) network. One MLP network includes an input layer (on the left), an output layer (on the right), and a plurality of hidden layers (in the middle). Each layer includes several nodes, which are referred to as neurons. Neurons at two adjacent layers are connected to each other.

Considering the neurons at the two adjacent layers, an output h of a neuron at a lower layer is obtained through a weighted sum of all neurons x at an upper layer that are connected to the neuron at the lower layer and inputting the weighted sum into an activation function. The output may be expressed by using a matrix as follows:

$$h = f(wx + b).$$

W is a weight matrix, *b* is a bias vector, and *f* is the activation function.

In this case, an output of the neural network may be recursively expressed as follows:

$$y = f_n(w_n f_{n-1}(\cdots) + b_n).$$

Briefly, the neural network may be understood as a mapping relationship from an input data set to an output data set. Generally, the neural network is initialized randomly. A process of obtaining the mapping relationship from random *w* and *b* by using existing data is referred to as neural network training.

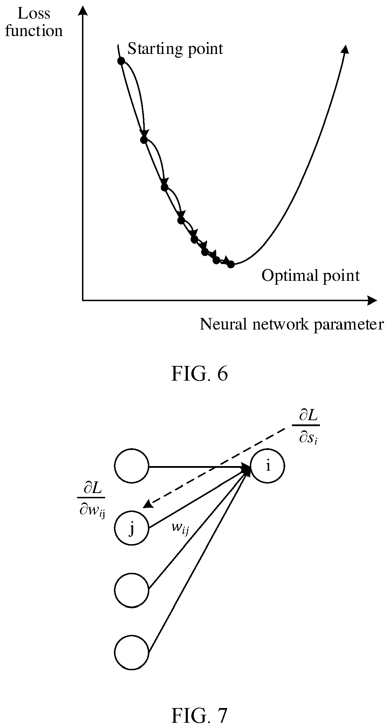

In a specific training manner, an output result of the neural network may be evaluated by using a loss function (loss function), an error is backpropagated. *W* and *b* are iteratively optimized by using a gradient descent method until the loss function reaches a minimum value. FIG. 6 is a schematic diagram of loss function optimization according to an embodiment of this application.

A gradient descent process may be expressed as follows:

$$\theta \leftarrow \theta - \eta \frac{\partial L}{\partial \theta}.$$

$\theta$ is a to-be-optimized parameter (for example, *w, b* described above), *L* is a loss function, $\eta$ is a learning rate for controlling a gradient descent step.

A backpropagation process may use a chain method for calculating a bias derivative. To be specific, a gradient of a parameter at a previous layer may be obtained by recursive calculation of a gradient of a parameter at a next layer. As shown in FIG. 7, a formula may be expressed as follows:

$$\frac{\partial L}{\partial w_{ij}} = \frac{\partial L}{\partial s_i} \frac{\partial s_i}{\partial w_{ij}}.$$

It is pointed out in step S410 that the $i^{th}$ device in the $k^{th}$ group of devices performs the n*M times of model training. For a specific training manner, refer to the following content.

Optionally, in some embodiments, that an $i^{th}$ device in a $k^{th}$ group of devices performs n*M times of model training includes:

For a $j^{th}$ time of model training in the n*M times of model training, the $i^{th}$ device receives a result obtained through inference by an $(i-1)^{th}$ device from the $(i-1)^{th}$ device;
the $i^{th}$ device determines a first gradient and a second gradient based on the received result, where the first gradient is for updating a model $M_{i,j-1}$, the second gradient is for updating a model $M_{i-1,j-1}$, the model $M_{i,j-1}$ is a model obtained by the $i^{th}$ device by completing a $(j-1)^{th}$ time of model training, and the model $M_{i-1,j-1}$ is a model obtained by the $(i-1)^{th}$ device by completing the $(j-1)^{th}$ time of model training; and the $i^{th}$ device trains the model $M_{i,j-1}$ based on the first gradient.

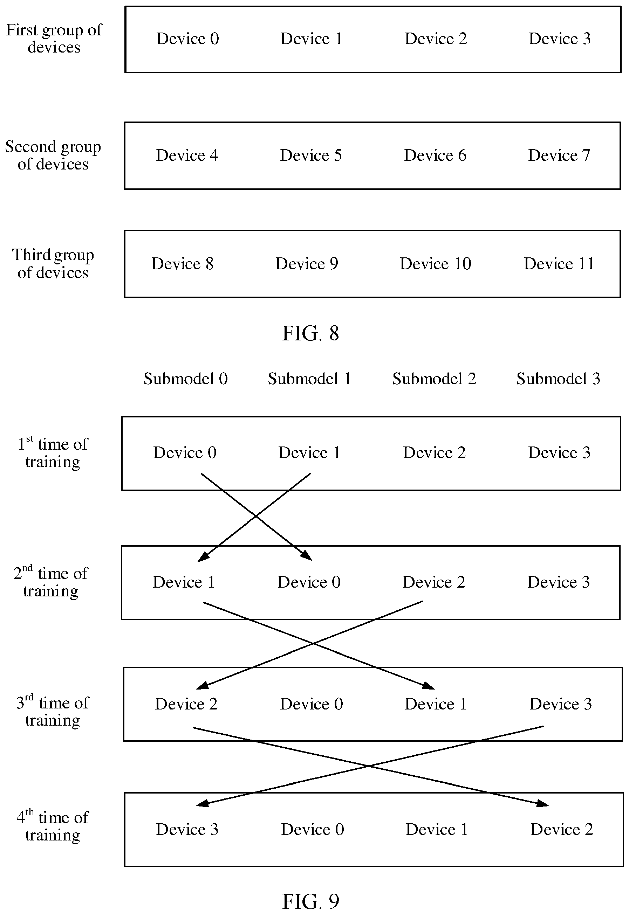

FIG. 8 is a schematic diagram of devices included in a plurality of groups of devices according to an embodiment of this application. It can be learned that the plurality of groups of devices include three groups of devices, and each group of devices includes four devices. Specifically, a first group of devices includes four devices: a device 0, a device 1, a device 2, and a device 3; a second group of devices includes four devices: a device 4, a device 5, a device 6, and a device 7; and a third group of devices includes four devices: a device 8, a device 9, a device 10, and a device 11.

The four devices included in the first group of devices are used as an example. It is assumed that j=1. After obtaining information about four submodels (including a submodel 0, a submodel 1, a submodel 2, and a submodel 3), the four devices may train the four submodels. Specifically, the device 0 trains the submodel 0 (that is, a model $M_{1,0}$ in this application, where the model $M_{1,0}$ represents a model obtained by a $1^{st}$ device by completing a $0^{th}$ time of model training, that is, an initialized model obtained by the $1^{st}$ device) based on local data $x_0$ and a training function $f_0$, to obtain an output result $y_0$, that is, $y_0 = f_0(x_0)$, and the device 0 sends the output result $y_0$ of the submodel 0 to the device 1. The device 1 trains the submodel 1 (that is, a model $M_{2,0}$ in this application, where the model $M_{2,0}$ represents a model obtained by a $2^{nd}$ device by completing a $0^{th}$ time of model training, that is, an initialized model obtained by the $2^{nd}$ device) based on the received output result $y_0$ and a training function $f_1$, to obtain an output result $y_1$, that is, $y_1 = f_1(y_0)$, and the device 1 sends the output result $y_1$ of the submodel 1 to the device 2. The device 2 trains the submodel 2 (that is, a model $M_{3,0}$ in this application, where the model $M_{3,0}$ represents a model obtained by a $3^{rd}$ device by completing a $0^{th}$ time of model training, that is, an initialized model obtained by the $3^{rd}$ device) based on the received output result $y_1$ and a training function $f_2$, to obtain an output result $y_2$, that is, $y_2 = f_2(y_1)$, and the device 2 sends the output result $y_2$ of the submodel 2 to the device 3. The device 3 trains the submodel 3 (that is, a model $M_{4,0}$ in this application, where the model $M_{4,0}$ represents a model obtained by a $4^{th}$ device by completing a $0^{th}$ time of model training, that is, an initialized model obtained by the $4^{th}$ device) based on the received output result $y_2$ and a training function $f_3$, to obtain an output result $y_3$, that is, $y_3 = f_3(y_2)$. The device 3 performs evaluation based on the output result $y_3$ and $y_{30}$ that is received from the device 0, to obtain gradients $G_{31}$, $G_{32}$, and updates the submodel 3 to a submodel 3' based on the gradient $G_{31}$. In addition, the device 3 sends the gradient $G_{32}$ to the device 2. The device 2 obtains gradients $G_{21}$, $G_{22}$ of the device 2 based on the received gradient $G_{32}$, updates the submodel 2 to a submodel 2' based on the gradient $G_{21}$, and sends the gradient $G_{22}$ to the device 1. The device 1 obtains gradients $G_{11}$, $G_{12}$ of the device 1 based on the received gradient $G_{22}$, and updates the submodel 1 to a submodel 1' based on the gradient $G_{11}$. In addition, the device 1 may send the gradient $G_{12}$ to the device 0. The device 0 obtains a gradient $G_{01}$ of the device 0 based on the received gradient $G_{12}$, and updates the submodel 0 to a submodel 0' based on the gradient $G_{01}$. Based on this, the four devices update the four submodels, and the updated submodels are the submodel 0', the submodel 1', the submodel 2', and the submodel 3', respectively.

A manner in which four devices included in another group of devices perform model training is similar to the manner in which the four devices included in the first group of devices perform model training. Details are not described again.

In the solution provided in this embodiment of this application, for the $j^{th}$ time of model training in the n*M times of model training, the $i^{th}$ device may determine the first gradient and the second gradient based on the result received from the $(i-1)^{th}$ device, and train the model $M_{i,j-1}$ based on the first gradient, so that a convergence speed in a model training process can be improved.

Optionally, in some embodiments, when i=M, the first gradient is determined based on the received inference result and a label received from a $1^{st}$ device; or when i≠M, the first gradient is determined based on the second gradient transmitted by an $(i+1)^{th}$ device.

In this embodiment of this application, when i=M, the first gradient is determined based on the received inference result and the label received from the $1^{st}$ device, for example, the foregoing gradient $G_{31}$ determined by the device 3 after evaluation based on the output result $y_3$ received from the device 2 and $y_{30}$ received from the device 0. When i≠M, the first gradient is determined based on the second gradient transmitted by the $(i+1)^{th}$ device, for example, the foregoing gradient $G_{21}$ determined by the device 2 based on the gradient $G_{32}$ transmitted from the device 3, the foregoing gradient $G_{11}$ determined by the device 1 based on the gradient $G_{22}$ transmitted from the device 2, and the foregoing gradient $G_{01}$ determined by the device 0 based on the gradient $G_{12}$ transmitted from the device 1.

In addition, it is further pointed out in step S410 that the $i^{th}$ device completes model parameter exchange with the at least one other device in the $k^{th}$ group of devices in every M times of model training. A specific exchange manner is as follows:

Refer to FIG. 9. The four devices included in the first group of devices are still used as an example. It is assumed that j=1. After obtaining information about four submodels (including a submodel 0, a submodel 1,

a submodel 2, and a submodel 3), the four devices may train the four submodels. A specific training manner is described above, and updated submodels are the submodel 0', the submodel 1', the submodel 2', and the submodel 3', respectively.

When j=2, model parameters of the device 0 and the device 1 may be exchanged. In this case, the device 1 obtains a model parameter of the submodel 0', and the device 0 obtains a model parameter of the submodel 1'. In this case, the device 1 may train the submodel 0' (that is, a model $M_{1,1}$ in this application, where the model $M_{1,1}$ represents a model obtained by the $1^{st}$ device by completing a $1^{st}$ time of model training) based on local data $x_1$ and a training function $f_0'$, to obtain an output result $y_0'$, that is, $y_0' = f_0'(x_1)$, and the device 1 sends the output result $y_0'$ of the submodel 0' to the device 0. The device 0 may train the submodel 1' (that is, a model $M_{2,1}$ in this application, where the model $M_{2,1}$ represents a model obtained by the $2^{nd}$ device by completing the $1^{st}$ time of model training) based on the received output result $y_0'$ and a training function $f_1'$, to obtain an output result $y_1'$, that is, $y_1' = f_1'\left(y_0'\right)$, and the device 0 sends the output result $y_1'$ of the submodel 1' to the device 2. The device 2 trains the submodel 2' (that is, a model $M_{3,1}$ in this application, where the model $M_{3,1}$ represents a model obtained by the $3^{rd}$ device by completing the $1^{st}$ time of model training) based on the received output result $y_1'$ and a training function $f_2'$, to obtain an output result $y_2'$, that is, $y_2' = f_2'\left(y_1'\right)$, and the device 2 sends the output result $y_2'$ of the submodel 2' to the device 3. The device 3 trains the submodel 3' (that is, a model $M_{4,1}$ in this application, where the model $M_{4,1}$ represents a model obtained by the $4^{th}$ device by completing the $1^{st}$ time of model training) based on the received output result $y_2'$ and a training function $f_3'$, to obtain an output result $y_3'$, that is, $y_3' = f_3'\left(y_2'\right)$. The device 3 performs evaluation based on the output result $y_3'$ and $y_{30}$ that is received from the device 0, to obtain gradients $G_{31}', G_{32}'$, and updates the submodel 3' to a submodel 3" based on the gradient $G_{31}'$. In addition, the device 3 sends the gradient $G_{32}'$ to the device 2. The device 2 obtains gradients $G'_{21}, G'_{22}$ of the device 2 based on the received gradient $G'_{32}$, updates the submodel 2' to a submodel 2" based on the gradient $G'_{21}$, and sends the gradient $G'_{22}$ to the device 1. The device 1 obtains gradients $G'_{11}, G'_{12}$ of the device 1 based on the received gradient $G'_{22}$, and updates the submodel 1' to a submodel 1" based on the gradient $G'_{11}$. In addition, the device 1 may send the gradient $G'_{12}$ to the device 0. The device 0 obtains a gradient $G'_{01}$, of the device 0 based on the received gradient $G'_{12}$, and updates the submodel 0' to a submodel 0" based on the gradient $G'_{01}$. Based on this, the four devices update the four submodels, and the updated submodels are the submodel 0", the submodel 1", the submodel 2", and the submodel 3", respectively.

When j=3, model information of the device 2 and model information of the device 1 may be exchanged. In this case, the device 2 trains the submodel 0" based on local data $x_2$ and a training function $f''_0$. A subsequent process is similar to the foregoing content, and details are not described again. After this update, updated submodels are a submodel 0''', a submodel 1''', a submodel 2''', and a submodel 3''', respectively.

When j=4, model information of the device 3 and model information of the device 2 may be exchanged. In this case, the device 3 trains the submodel 0''' based on local data $x_3$ and the training function $f'''_0$. A subsequent process is similar to the foregoing content, and details are not described again. After this update, updated submodels are a submodel 0"", a submodel 1"", a submodel 2"", and a submodel 3"", respectively.

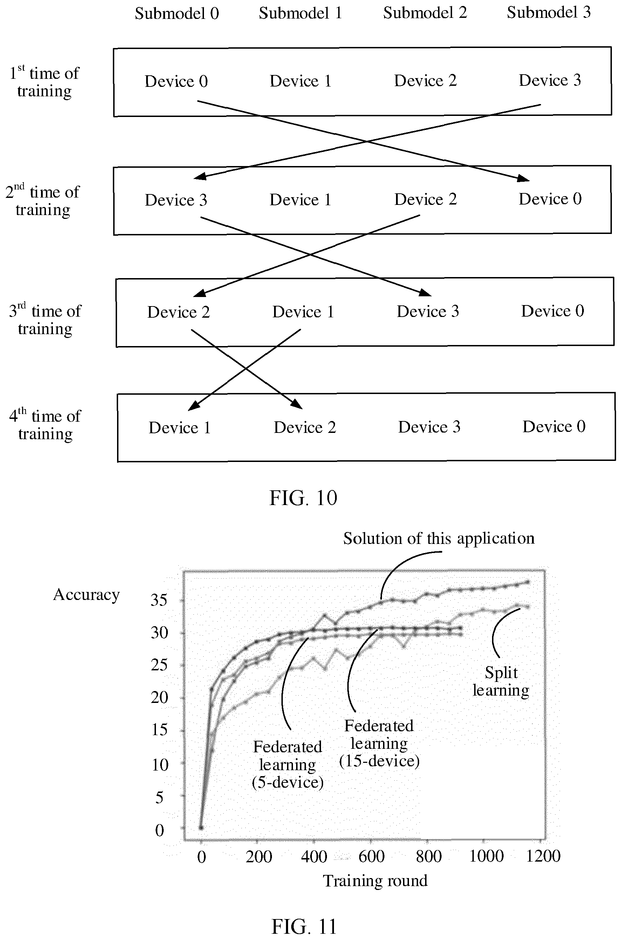

It should be noted that a sequence of exchanging model parameters between devices includes but is not limited to the sequence shown in the foregoing embodiment, and may further include another sequence. FIG. 10 is another schematic diagram of training a model by a device based on a rotation sequence according to an embodiment of this application.

Refer to FIG. 10. After a submodel 0, a submodel 1, a submodel 2, and a submodel 3 are trained and updated once by the device 0, the device 1, the device 2, and the device 3, a submodel 0', a submodel 1', a submodel 2', and a submodel 3' are obtained. Before a 2nd time of training is performed, model parameters of the device 3 and the device 0 may be exchanged first. In this case, the device 3 obtains a model parameter of the submodel 0', and the device 0 obtains a model parameter of the submodel 3'. The submodel 0', the submodel 1', the submodel 2', and the submodel 3' are updated based on the exchanged model parameters, to obtain updated submodels obtained after the 2nd time of training is completed. Before a 3rd time of training is performed, model parameters of the device 2 and the device 3 may be exchanged, and the updated submodels obtained through the 2nd time of training are updated based on the exchanged model parameters, to obtain updated submodels obtained after the 3rd time of training is completed. Before a 4th time of training is performed, model parameters of the device 1 and the device 2 may be exchanged, and the updated submodels obtained through the 3rd time of training are updated based on the exchanged model parameters, to finally obtain updated submodels obtained after the 4th time of training is completed.

With reference to FIG. 9 and FIG. 10, it can be learned that a principle of model parameter exchange between devices is as follows: In a process of every M times of model training, all devices may sequentially perform training and update on submodels 0 or updated submodels 0 based on local data.

For example, refer to FIG. 9. In the 1st time of model training, the device 0 performs training and update on the submodel 0 based on the local data $x_0$, to obtain the submodel 0'; in the 2nd time of model training, the device 1 performs training and update on the submodel 0' based on the local data $x_1$, to obtain the submodel 0"; in the 3rd time of model training, the device 2 performs training and update on the submodel 0" based on the local data $x_2$, to obtain the submodel 0'''; and in the 4th time of model training, the device 3 performs training and update on the submodel 0''' based on the local data $x_3$, to obtain the submodel 0"".

For another example, refer to FIG. 10. In the 1st time of model training, the device 0 performs training and update on the submodel 0 based on the local data $x_0$, to obtain the submodel 0'; in the 2nd time of model training, the device 3 performs training and update on the submodel 0' based on the local data $x_3$, to obtain the submodel 0"; in the 3rd time of model training, the device 2 performs training and update on the submodel 0" based on the local data $x_2$, to obtain the submodel 0'''; and in the 4th time of model training, the device 0 performs training and update on the submodel 0''' based on the local data $x_0$, to obtain the submodel 0"".

Therefore, a sequence of exchanging model parameters between devices is not specifically limited in this embodiment of this application. This application may be applied provided that in a process of every M times of model training, all devices may sequentially perform training and update on submodels 0 or updated submodels 0 based on local data.

According to the solution provided in this embodiment of this application, in every M times of model training, the i-th device completes model parameter exchange with the at least one other device in the $k^{th}$ group of devices, and in a process of every M times of model training, all devices in the $k^{th}$ group of devices may sequentially perform training and update on a $1^{st}$ submodel or an updated $1^{st}$ submodel based on local data, so that local data utilization and privacy of the devices can be improved.

It is pointed out in step S440 that the target device performs fusion on the K groups of models. For a specific fusion manner, refer to the following content.

Optionally, in some embodiments, that the target device performs fusion on K groups of models includes:

The target device performs inter-group fusion on a $q^{th}$ model in each of the K groups of models according to a fusion algorithm, where $q$ e [1, $M$ ].

As described above, the target device receives the four updated submodels sent by the first group of devices: the submodel $0^1$, the submodel $1^1$, the submodel $2^1$, and the submodel $3^1$, respectively; the target device receives the four updated submodels sent by the second group of devices: the submodel $0^2$, the submodel $1^2$, the submodel $2^2$, and the submodel $3^2$, respectively; and the target device receives the four updated submodels sent by the third group of devices: the submodel $0^3$, the submodel $1^3$, the submodel $2^3$, and the submodel $3^3$, respectively. Therefore, the target device may fuse the received submodels 0 (including the submodel $0^1$, the submodel $0^2$, and the submodel $0^3$), fuse the received submodels 1 (including the submodel $1^1$, the submodel $1^2$, and the submodel $1^3$), fuse the received submodels 2 (including the submodel $2^1$, the submodel $2^2$, and the submodel $2^3$), and fuse the received submodels 3 (including the submodel $3^1$, the submodel $3^2$, and the submodel $3^3$).

In the foregoing descriptions of FIG. 9, the first group of devices includes four devices, the four devices perform model parameter exchange between the devices for three times, and the four devices perform training and update on the submodels for four times. If the four devices send, to the target device after performing training and update on the submodels for four times, the updated submodels obtained after the $4^{th}$ time of training and update, for example, send the submodel 0"", the submodel 1"", the submodel 2"", and the submodel 3"" that are obtained after the $4^{th}$ time of training and update to the target device in the foregoing example, the submodel 0"", the submodel 1"", the submodel 2"", and the submodel 3"" in this application are the submodel $0^1$, the submodel $1^1$, the submodel $2^1$, and the submodel 3'.

If the first group of devices perform n*4 times of training and update, for example, n=2, in other words, the four devices perform eight times of training and update on the submodels, the four devices send, to the target device, submodels obtained after the eight times of training and update are completed, for example, a submodel 0'''''', a submodel 1'''''', a submodel 2'''''', and a submodel 3''''''. In this case, in this application, the submodel 0'''''', the submodel 1'''''', the submodel 2'''''', and the submodel 3'''''' are the submodel $0^1$, the submodel $1^1$, the submodel $2^1$, and the submodel $3^1$.

If n=2, the four devices perform four times of training and update on the submodels to obtain a submodel 0"", a submodel 1"", a submodel 2"", and a submodel 3"". During a $5^{th}$ time of training and update, the four devices correspondingly obtain model information of the submodel 0"", the submodel 1"", the submodel 2"", and the submodel 3"", respectively, and perform training and update on the submodel 0"", the submodel 1"", the submodel 2"", and the submodel 3"". Then, the devices exchange model parameters, and perform training and update on updated submodels based on the exchanged model parameters, until the submodels are trained and updated for eight times. For the $5^{th}$ to an $8^{th}$ times of model training, refer to the $1^{st}$ to the $4^{th}$ model training processes. Details are not described herein again.

In the solution provided in this embodiment of this application, inter-group fusion is performed on the $q^{th}$ model in each of the K groups of models to obtain a global model. Because in the solution of this application, models obtained through intra-group training are fused, a convergence speed in a model training process can be further improved.

Optionally, in some embodiments, the method 400 may further include the following steps:

When the $i^{th}$ device completes model parameter exchange with the at least one other device in the $k^{th}$ group of devices, the $i^{th}$ device exchanges a locally stored sample quantity with the at least one other device in the $k^{th}$ group of devices.

The target device receives a sample quantity sent by the $i^{th}$ device in the $k^{th}$ group of devices, where the sample quantity includes a sample quantity currently stored in the $i^{th}$ device and a sample quantity obtained by exchanging with the at least one other device in the $k^{th}$ group of devices.

That the target device performs inter-group fusion on a $q^{th}$ model in each of the K groups of models according to a fusion algorithm includes:

The target device performs inter-group fusion on the $q^{th}$ model in each of the K groups of models based on the sample quantity and according to the fusion algorithm.

In this embodiment of this application, when exchanging the model parameters, the devices may further exchange sample quantities locally stored in the devices. Still refer to FIG. 9. After the $1^{st}$ time of training is performed on the submodel 0, the submodel 1, the submodel 2, and the submodel 3 by the device 0, the device 1, the device 2, and the device 3, for the $2^{nd}$ time of training, when exchanging model parameters with each other, the device 1 and the device 0 may exchange locally stored sample quantities, to be specific, the device 0 receives the sample quantity locally stored in the device 1, and the device 1 receives the sample quantity locally stored in the device 0. For the $3^{rd}$ time of training, when exchanging the model parameters with each other, the device 2 and the device 1 may exchange locally stored sample quantities, to be specific, the device 1 receives the sample quantity locally stored in the device 2, and the device 2 receives the sample quantity locally stored in the device 1. For the 4th time of training, when exchanging the model parameters with each other, the device 3 and the device 2 may exchange locally stored sample quantities, to be specific, the device 3 receives the sample quantity locally stored in the device 2, and the device 2 receives the sample quantity locally stored in the device 3.

For fusion of the submodels, refer to a federated learning algorithm. The submodel 0 is used as an example. The target device separately receives updated submodels 0 sent by the first group of devices, the second group of devices, and the third group of devices, for example, the submodel $0^1$, the submodel $0^2$, and the submodel $0^3$ described above. In this case, the target device performs weighted averaging separately by using sample quantities of corresponding devices as weights, that

$$W_0 = \sum_{q \in S} \frac{D'_q W_q}{\sum_{q \in S^t} D'_q}, q = 1, 2, 3, 4$$

is, , where S= {submodel 0, submodel 1, submodel 2, submodel 3}, q represents a $q^{th}$ submodel, $D'_q$ represents a sample quantity of a device corresponding to the $q^{th}$ submodel, and $W_q$ represents a weight of the $q^{th}$ submodel.

Similarly, the submodel 1, the submodel 2, and the submodel 3 may also be fused with reference to the foregoing methods. Details are not described herein again.

According to the solution provided in this embodiment of this application, when completing the model parameter exchange with the at least one other device in the $k^{th}$ group of devices, the $i^{th}$ device may further exchange the locally stored sample quantity. The $i^{th}$ device may send a sample quantity (including the locally stored sample quantity and a sample quantity obtained through exchange) to the target device. After receiving the sample quantity, the target device can perform inter-group fusion on a $q^{th}$ model in each of K groups of models based on the sample quantity and according to a fusion algorithm. This can effectively improve a model generalization capability.

Optionally, in some embodiments, the method 400 further includes the following step:

For a next time of training following the n*M times of model training, the $i^{th}$ device obtains information about a model $M_{\langle r \rangle}$ from the target device, where the model $M_{\langle r \rangle}$ is an $r^{th}$ model obtained by the target device by performing inter-group fusion on the model $M^k_{i, n*M}$, $r \in$ [1, $M$], the model $M^k_{i, n*M}$ is a model obtained by the $i^{th}$ device in the $k^{th}$ group of devices by completing the n*M times of model training, i traverses from 1 to M, and k traverses from 1 to K.

In this embodiment of this application, FIG. 9 is used as an example. For the first group of devices, after obtaining information about the four submodels, the four devices may train and update the four submodels, and updated submodels are the submodel 0', the submodel 1', the submodel 2', and the submodel 3'. After the model parameters of the device 0 and the device 1 are exchanged, the submodel 0', the submodel 1', the submodel 2', and the submodel 3' are trained and updated again, and the updated submodels are the submodel 0", the submodel 1", the submodel 2", and the submodel 3". The model parameters of the device 0 and the device 2 are exchanged, to train and update the submodel 0", the submodel 1", the submodel 2", and the submodel 3" again, and the updated submodels are the submodel 0‴, the submodel 1‴, the submodel 2‴, and the submodel 3‴. After the model parameters of the device 0 and the device 3 are exchanged, the submodel 0‴, the submodel 1‴, the submodel 2‴, and the submodel 3‴ are trained and updated, and the updated submodels are the submodel 0"", the submodel 1"", the submodel 2"", and the submodel 3"". After the four times of training are completed, the four times of training are referred to as one round of training.

It is assumed that M=3. After the four devices included in each group of devices complete n rounds of intra-group training on the four submodels, the four devices included in each group of devices send four updated submodels (that is, three groups of submodels, and each group includes four submodels) to the target device. The target device may perform inter-group fusion on the received submodels, for example, perform inter-group fusion on the $q^{th}$ model in each of the three groups of models, to obtain four submodels, which may be denoted as models $M_{\langle 1 \rangle}$, $M_{\langle 2 \rangle}$, $M_{\langle 3 \rangle}$, $M_{\langle 4 \rangle}$. Therefore, when a next time of training is performed, the four devices included in each group of devices may obtain, from the target device, information about corresponding fused submodels.

According to the solution provided in this embodiment of this application, for the next time of training following the n*M times of model training, the $i^{th}$ device obtains the information about the model $M_{\langle r \rangle}$ from the target device, so that accuracy of the information about the model can be ensured, thereby improving accuracy of model training.

To describe advantages of the solution of this application, the model training method in this application, split learning, and federated learning are compared, as shown in Table 1 and FIG. 11. A ResNet (resnet) 20 neural network structure is used, and there are a total of 1000 available devices. A quantity M of devices included in each group of devices is 3, a quantity K of groups of devices is 5, and a fusion round period n is 10. The compared algorithms are 3-split learning (3 represents a quantity of distributed nodes included in split learning), 5-device federated learning (5 represents a quantity of distributed nodes included in federated learning), and 15-device federated learning (15 represents a quantity of distributed nodes included in federated learning). It can be learned from Table 1 that the solution of this application achieves optimal performance and an optimal training speed, and can maintain low average device traffic.

**Table 1**

| Solution | Average device traffic |
|---|---|
| Solution of this application | 4233975.6 |
| Split learning (3) | 4207621.5 |
| Federated learning (5) | 6295541.6 |
| Federated learning (15) | 6301323.9 |

FIG. 11 is a schematic diagram of accuracy comparison according to an embodiment of this application. It can be learned from FIG. 11 that, compared with another solution, accuracy of the solution provided in this application is correspondingly improved as a quantity of training rounds increases.

As described in step S430, the target device receives the model $M^{k}_{i,n*M}$ sent by the i<sup>th</sup> device in the k<sup>th</sup> group of devices in the K groups of devices, i traverses from 1 to M, and k traverses from 1 to K. The K groups of devices may perform selection in the following manner.

Optionally, in some embodiments, the method 400 may further include the following steps:

The target device receives status information reported by N devices, where the N devices include M devices included in each group of devices in the K groups of devices;

the target device selects, based on the status information, the M devices included in each group of devices in the K groups of devices from the N devices; and

the target device broadcasts a selection result to the M devices included in each group of devices in the K groups of devices.

For the i<sup>th</sup> device included in the k<sup>th</sup> group of devices:

The i<sup>th</sup> device receives the selection result sent by the target device.

That the i<sup>th</sup> device obtains information about a model $M_{(r)}$ from the target device includes:

The i<sup>th</sup> device obtains the information about the model $M_{(r)}$ from the target device based on the selection result.

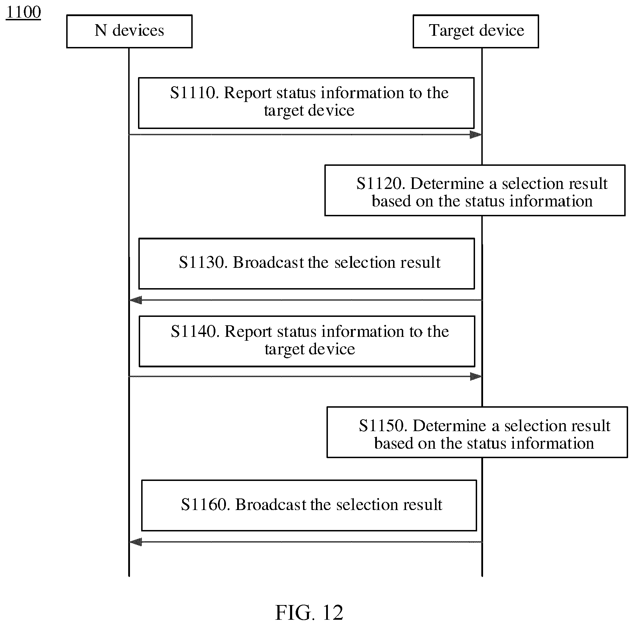

FIG. 12 is a schematic diagram of a method for interaction between the N devices and the target device according to an embodiment of this application. Refer to FIG. 12. As can be learned: In step S1110, the N devices may first report the status information of the N devices to the target device. After the target device receives the status information reported by the N devices, in step S1120, the target device selects the K groups of devices from the N devices based on the status information. In step S1130, the target device broadcasts the selection result to the K groups of devices. After receiving the selection result, the K groups of devices may correspondingly obtain information about a model based on the selection result.

Optionally, in some embodiments, the selection result includes at least one of the following:

a selected device, a grouping status, or information about a model.

Optionally, in some embodiments, the information about the model includes:

a model structure of the model, a model parameter of the model, a fusion round period, and a total quantity of fusion rounds.

Optionally, in some embodiments, the status information includes at least one of the following information:

device computing power, a storage capability, resource usage, an adjacent matrix, and a hyperparameter.

The selection result in this embodiment of this application may include at least one of the foregoing information. Specifically, it is assumed that 20 devices (numbered sequentially as a device 0, a device 1, a device 2, ..., a device 18, and a device 19) report status information to the target device, and the target device needs to select 12 devices therefrom based on the status information (such as device computing power, storage capabilities, resource usage, adjacent matrices, and hyperparameters) of the 20 devices. If the target device selects 12 devices numbered as the device 0, the device 1, the device 2, ..., and the device 11, the 12 devices may be grouped. For example, the device 0, the device 1, the device 2, and the device 3 are devices in a 1<sup>st</sup> group, the device 4, the device 5, the device 6, and the device 7 are devices in a 2<sup>nd</sup> group, and the device 8, the device 9, the device 10, and the device 11 are devices in a 3<sup>rd</sup> group. Then, the target device broadcasts a grouping status to the 12 devices.

The status information in this embodiment of this application may include, for example, device computing power, a storage capability, resource usage, an adjacent matrix, and a hyperparameter. The device computing power represents a computing capability of a device, the storage capability represents a capability of the device to store data or information, the resource usage represents a resource currently occupied by the device, the adjacent matrix represents a degree of association between devices, such as channel quality and a data correlation, and the hyperparameter includes a learning rate, a batch size, a fusion round period n, and a total quantity of fusion rounds, and the like.

After receiving the grouping status, the 12 devices may correspondingly obtain information about models based on the grouping status. For example, the device 0, the device 1, the device 2, and the device 3 included in the first group of devices may correspondingly obtain information about submodels $M_{1,0}$, $M_{2,0}$, $M_{3,0}$, $M_{4,0}$ (that is, initialization models), respectively; the device 4, the device 5, the device 6, and the device 7 included in the second group of devices may correspondingly obtain information about the submodels $M_{1,0}$, $M_{2,0}$, $M_{3,0}$, $M_{4,0}$, respectively; and the device 8, the device 9, the device 10, and the device 11 included in the third group of devices may correspondingly obtain information about the submodels $M_{1,0}$, $M_{2,0}$, $M_{3,0}$, $M_{4,0}$, respectively.

The model information in this embodiment of this application may include a model structure and/or a model parameter. The model structure includes a quantity of layers of hidden layers of the model. The model parameter may include an initialization parameter, a random number seed, and another hyperparameter required for training (for example, a learning rate, a batch size, a fusion round period n, and a total quantity of fusion rounds).

For example, it is assumed that the fusion round period n in this embodiment of this application is 2, and M=4. After performing two rounds of model training on obtained models (for example, the foregoing submodels $M_{1,0}$, $M_{2,0}$, $M_{3,0}$, $M_{4,0}$), the three groups of devices may send trained models to the target device. To be specific, the i$^{th}$ device in the k$^{th}$ group of devices sends the model $M_{i,3*4}$ to the target device, where i traverses from 1 to 4, and k traverses from 1 to 3. In this case, the target device receives three groups of models, and each group of models includes four models. The target device may fuse the three groups of received models, and models obtained through fusion include four models, which may be denoted as models $M_{\langle 1 \rangle}$, $M_{\langle 2 \rangle}$, $M_{\langle 3 \rangle}$, $M_{\langle 4 \rangle}$.

After the target device performs fusion on the received models, each group of devices in the K groups of devices may correspondingly obtain information about fused models from the target device again, perform n*M rounds of training and update on the fused models (that is, the models $M_{\langle 1 \rangle}$, $M_{\langle 2 \rangle}$, $M_{\langle 3 \rangle}$, $M_{\langle 4 \rangle}$) again based on the obtained model information, and send the models obtained through the training and update to the target device. The target device performs fusion on the received models again and repeats until the target device completes a total quantity of fusion rounds. For example, if a total quantity of fusion rounds is 10, the target device obtains a final model after performing fusion for 10 times.

Certainly, optionally, in some embodiments, after the target device completes inter-group combination each time or completes inter-group combination for a plurality of times, the target device may reselect K groups of devices. The reselected K groups of devices may be the same as or different from K groups of devices selected last time. For example, the K groups of devices selected last time include 12 devices sequentially numbered as the device 0, the device 1, the device 2, ..., and the device 11, and the K groups of reselected devices may be 12 devices sequentially numbered as the device 2, the device 3, the device 4, ..., and the device 13, or the K groups of reselected devices may be 12 devices numbered as the device 2, the device 3, the device 4, the device 5, the device 8, the device 9, the device 10, the device 11, the device 16, the device 17, the device 18, and the device 19.

Refer to FIG. 12. In step S1120, the target device determines the selection result based on the status information reported by the N device. In step S1150, the target device determines a selection result again based on status information reported by the N devices. To be specific, the target device may reselect K groups of devices from the N devices each time one or more times of inter-group fusion are completed.

Certainly, in some embodiments, after the target device completes one or more times of inter-group fusion, the received status information may not be the information reported by the previous N devices, may be status information reported by other N devices, or may be status information reported by other X (X≠N and X≥K*M) devices. This is not limited.

Based on this, the foregoing describes the solution of this application by using the i$^{th}$ device in the k$^{th}$ group of devices in the K groups of devices and the target device as an example. The following describes the solution of this application by using a k$^{th}$ group of devices in the K groups of devices and a target device as an example.

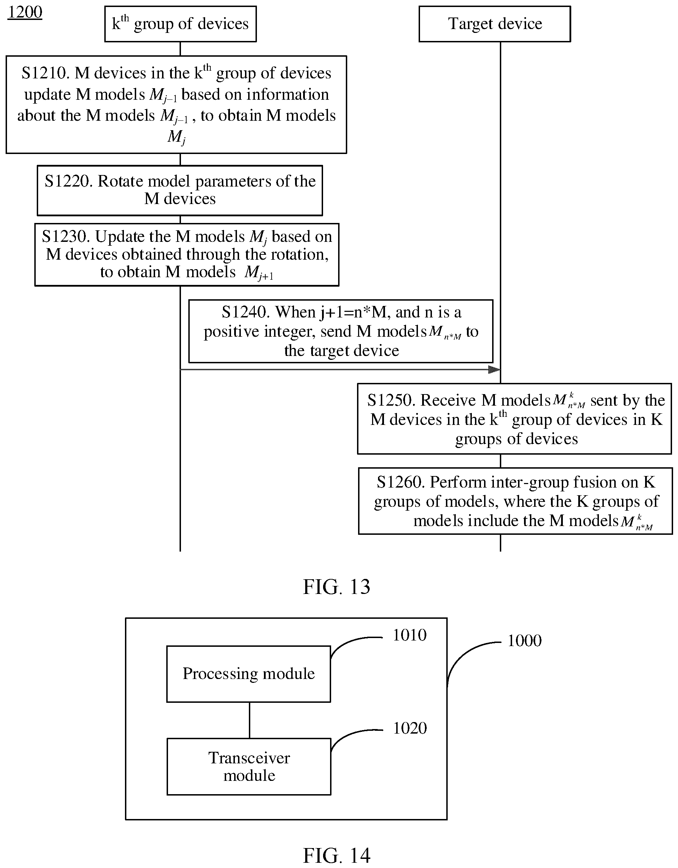

FIG. 13 is a schematic diagram of a model training method 1200 according to another embodiment of this application. The method 1200 may include but is not limited to steps S1210 to S1260.

S1210. M devices in a k$^{th}$ group of devices update M models $M_{j-1}$ based on information about the M models $M_{j-1}$ to obtain M models $M_j$, where j is an integer greater than or equal to 1.

The k$^{th}$ group of devices in this embodiment of this application includes M devices. The M devices may be all terminal devices, or may be all network devices, or may include some terminal devices and some network devices. This is not limited.

For example, it is assumed that the k$^{th}$ group of devices includes four devices: a device 0, a device 1, a device 2, and a device 3. For the four devices, four models (for example, a submodel 0, a submodel 1, a submodel 2, and a submodel 3) may be updated based on information about the four models, to obtain a submodel 0', a submodel 1', a submodel 2', and a submodel 3'.

It should be noted that, in this embodiment of this application, when j=1, the models $M_{j-1}$ represent models obtained by the M devices in the k$^{th}$ group of devices by completing a 0$^{th}$ time of model training, that is, initialization models, and the models $M_j$ represent models obtained by the M devices in the k$^{th}$ group of devices by completing a 1$^{st}$ time of model training. When j=2, the models $M_{j-1}$ represent models obtained by the M devices in the k$^{th}$ group of devices by completing the 1$^{st}$ time of model training, and the models $M_j$ represent models obtained by the M devices in the k$^{th}$ group of devices by completing a 2$^{nd}$ time of model training.

S1220. Rotate model parameters of the M devices.

S1230. Update the M models $M_j$ based on M devices obtained through the rotation, to obtain M models $M_{j+1}$.

It is assumed that j=1. The foregoing four devices may obtain information about four submodels (including a submodel 0, a submodel 1, a submodel 2, and a submodel 3), and train the four submodels. A specific training manner is described above, and the four updated submodels $M_1$ are a submodel 0', a submodel 1', a submodel 2', and a submodel 3', respectively.

When j=2, before a 2nd time of model training, model parameters of the device 0 and the device 1 may be exchanged. In this case, the device 1 obtains a model parameter of the submodel 0', and the device 0 obtains a model parameter of the submodel 1'. In this case, the device 1 may train the submodel 0' based on local data $x_1$ and a training function $f_0'$, to obtain an output result $y_0'$, that is, $y_0' = f_0'(x_1)$, and the device 1 sends the output result $y_0'$ of the submodel 0' to the device 0. The device 0 may train the submodel 1' based on the received output result $y_0'$ and a training function $f_1'$, to obtain an output result $y_1'$, that is, $y_1' = f_1'(y_0')$, and the device 1 sends the output result $y_1'$ of the submodel 1' to the device 2. The device 2 trains the submodel 2' based on the received output result $y_1'$ and a training function $f_2'$, to obtain an output result $y_2'$, that is, $y_2' = f_2'(y_1')$, and the device 2 sends the output result $y_2'$ of the submodel 2' to the device 3. The device 3 trains the submodel 3' based on the received output result $y_2'$ and a training function $f_3'$, to obtain an output result $y_3'$, that is, $y_3' = f_3'(y_2')$. The device 3 performs evaluation based on the output result $y_3'$ and $y_{30}$ that is received from the device 0, to obtain gradients $G_{31}', G_{32}'$, and updates the submodel 3' to a submodel 3" based on the gradient $G_{31}'$. In addition, the device 3 sends the gradient $G_{32}'$ to the device 2. The device 2 obtains gradients $G_{21}', G_{22}'$ of the device 2 based on the received gradient $G_{32}'$, updates the submodel 2' to a submodel 2" based on the gradient $G_{21}'$, and sends the gradient $G_{22}'$ to the device 1. The device 1 obtains gradients $G_{11}', G_{12}'$ of the device 1 based on the received gradient $G_{22}'$, updates the submodel 1' to a submodel 1" based on the gradient $G_{11}'$, and sends the gradient $G_{12}'$ to the device 0. The device 0 obtains a gradient $G_{01}'$, of the device 0 based on the received gradient $G_{12}'$, and updates the submodel 0' to a submodel 0" based on the gradient $G_{01}'$. Based on this, the four devices update the four submodels, and the four updated submodels $M_2$ are the submodel 0", the submodel 1", the submodel 2", and the submodel 3", respectively.

When j=3, model information of the device 2 and model information of the device 1 may be exchanged. In this case, the device 2 trains the submodel 0" based on local data $x_2$ and a training function $f_0''$. A subsequent process is similar to the foregoing content, and details are not described again. After this update, four updated submodels $M_3$ are a submodel 0''', a submodel 1''', a submodel 2''', and a submodel 3''', respectively.

When j=4, model information of the device 3 and model information of the device 2 may be exchanged. In this case, the device 3 trains the submodel 0''' based on local data $x_3$ and a training function $f_0'''$. A subsequent process is similar to the foregoing content, and details are not described again. After this update, four updated submodels $M_4$ are a submodel 0"", a submodel 1"", a submodel 2"", and a submodel 3"", respectively.

S1240. When j+1=n*M, and n is a positive integer, the M devices send M models $M_{n*M}$ to a target device.

Optionally, in some embodiments, the target device may be a device in the k groups of devices, or may be a device other than the k groups of devices. This is not limited.

Assuming that n=1 in this application, the M devices send the submodel 0"", the submodel 1"", the submodel 2"", and the submodel 3"" to the target device.

S 1250. The target device receives M models $M_{n*M}^k$ sent by the M devices in the kth group of devices in K groups of devices, where the model $M_{n*M}^k$ is a model obtained by the M devices in the kth group of devices by completing an (n*M)th time of model training, M is greater than or equal to 2, and k traverses from 1 to K.

In this embodiment of this application, k traverses from 1 to K. In other words, the target device receives models that are obtained after the n*M times of model training are completed and that are sent by M devices in each of the K groups of devices.

For example, in this embodiment of this application, it is assumed that K is 3 and M is 4. For a first group of devices, four devices included in the first group of devices send four models obtained by the four devices by performing n*4 times of training to the target device. For a second group of devices, four devices included in the second group of devices send four models obtained by the four devices by performing n*4 times of training to the target device. For a third group of devices, four devices included in the third group of devices send four models obtained by the four devices by performing n*4 times of training to the target device. Therefore, the target device receives 12 models, and the 12 models are sent by the 12 devices included in the three groups of devices.

The target device in this embodiment of this application may be a terminal device, or may be a network device. If the K groups of devices are terminal devices, the target device may be a device with highest computing power in the K groups of terminal devices, may be a device with a smallest communication delay in the K groups of terminal devices, may be a device other than the K groups of terminal devices, for example, another terminal device or a network device, or may be a device specified by the device other than the K groups of terminal devices, for example, a device specified by the network device or the another terminal device (the specified device may be a device in the K groups of devices, or may be a device other than the K groups of devices).

If the K groups of devices are network devices, the target device may be a device with highest computing power in the K groups of network devices, may be a device with a smallest communication delay in the K groups of network devices, may be a device other than the K groups of network devices, for example, another network device or a terminal device, or may be a device specified by the device other than the K groups of network devices, for example, a device specified by the terminal device or the another network device (the specified device may be a device in the K groups of devices, or may be a device other than the K groups of devices).

It should be understood that there may be one or more target devices in this embodiment of this application. This is not limited.

For example, it is assumed that the k$^{th}$ group of devices includes four devices: a device 0, a device 1, a device 2, and a device 3. If a communication delay between the device 0 and a target device 2 and a communication delay between the device 1 and the target device 2 are greater than a communication delay between the device 0 and a target device 1 and a communication delay between the device 1 and the target device 1, and a communication delay between the device 2 and the target device 1 and a communication delay between the device 3 and the target device 1 are greater than a communication delay between the device 2 and the target device 2 and a communication delay between the device 3 and the target device 2, the device 0 and the device 1 may separately send, to the target device 1, models obtained by the device 0 and the device 1 through the n*M times of training, and the device 2 and the device 3 may separately send, to the target device 2, models obtained by the device 2 and the device 3 through the n*M times of training. In a subsequent fusion process, the target device 1 may fuse the models received from the device 0 and the device 1, and the target device 2 may fuse the models received from the device 2 and the device 3. After the fusion is completed, the target device 1 and the target device 2 may synchronize the fused models, to facilitate a next time of model training.

S1260. The target device performs inter-group fusion on K groups of models, where the K groups of models include the M models $M^{k}_{n*M}$.

In step S1250, the target device receives the models that are obtained after the n*M times of model training are completed and that are sent by the M devices in each of the K groups of devices. In other words, the target device receives the K groups of M models. Therefore, for same submodels, the target device may perform inter-group fusion on the submodels.

For example, it is still assumed that K is 3 and M is 4. The target device receives four submodels sent by a first group of devices after completing n*4 times of model training: a submodel $0^1$, a submodel $1^1$, a submodel $2^1$, and a submodel $3^1$, respectively. The target device receives four submodels sent by a second group of devices after completing n*4 times of model training: a submodel $0^2$, a submodel $1^2$, a submodel $2^2$, and a submodel $3^2$, respectively. The target device receives four submodels sent by a third group of devices after completing n*4 times of model training: a submodel $0^3$, a submodel $1^3$, a submodel $2^3$, and a submodel $3^3$, respectively. Therefore, the target device may fuse the received submodels 0 (including the submodel $0^1$, the submodel $0^2$, and the submodel $0^3$), fuse the received submodels 1 (including the submodel $1^1$, the submodel $1^2$, and the submodel $1^3$), fuse the received submodels 2 (including the submodel $2^1$, the submodel $2^2$, and the submodel $2^3$), and fuse the received submodels 3 (including the submodel $3^1$, the submodel $3^2$, and the submodel $3^3$).

It should be noted that, in some embodiments, if the target device does not receive, within a specified time threshold, all models sent by each group of devices in the K groups of devices, the target device may perform inter-group fusion on the received models.

For example, it is still assumed that K is 3 and M is 4. Within the specified time threshold (or the preset time threshold), the target device receives four submodels sent by a first group of devices after completing n*4 times of model training: a submodel $0^1$, a submodel $1^1$, a submodel $2^1$, and a submodel $3^1$, respectively. The target device receives four submodels sent by a second group of devices after completing n*4 times of model training: a submodel $0^2$, a submodel $1^2$, a submodel $2^2$,

and a submodel $3^2$, respectively. The target device receives submodels sent by some devices in a third group of devices after completing n*4 times of model training: a submodel $0^3$ and a submodel $1^3$, respectively. In this case, the target device may fuse the received submodels, to be specific, fuse the received submodels 0 (including the submodel $0^1$, the submodel $0^2$, and the submodel $0^3$), fuse the received submodels 1 (including the submodel $1^1$, the submodel $1^2$, and the submodel $1^3$), fuse the received submodels 2 (including the submodel $2^1$ and the submodel $2^2$), and fuse the received submodels 3 (including the submodel $3^1$ and the submodel $3^2$).

In the solution provided in this embodiment of this application, after training the M models based on the information about the M models $M_{j-1}$, the M devices included in each group of devices in the K groups of devices rotate the model parameters of the M devices, and update the M models $M_j$ based on the M devices obtained through the rotation. When j + 1 =n *M, the M devices send the M models $M_{n*M}$ to the target device, so that the target device performs interfusion on the K groups of models. In the solution of this application, models obtained through intra-group training are fused, so that a convergence speed in a model training process can be improved. In addition, in the solution of this application, K groups of devices synchronously train the models, so that utilization of data and computing power in the model training process can be improved. Moreover, because all devices in this application perform processing or receiving and sending based on a part of a model, requirements on computing, storage, and communication capabilities of the devices can be reduced.

Optionally, in some embodiments, that M devices in a $k^{th}$ group of devices update M models $M_{j-1}$ based on information about the M models $M_{j-1}$ includes:

A $1^{st}$ device in the $k^{th}$ group of devices performs inference on a model $M_{1,j-1}$ based on locally stored data, where the model $M_{i,j-1}$ represents a model obtained by the $1^{st}$ device by completing a $(j-1)^{th}$ time of model training;

> an $i^{th}$ device in the $k^{th}$ group of devices obtains a result of inference performed by an $(i-1)^{th}$ device, where i e (1,M];
> the $i^{th}$ device determines a first gradient and a second gradient based on the obtained result, where the first gradient is for updating a model $M_{i,j-1}$, the second gradient is for updating a model $M_{i-1,j-1}$, the model $M_{i,j-1}$ is a model obtained by the $i^{th}$ device by completing the $(j-1)^{th}$ time of model training, and the model $M_{i-1,j-1}$ is a model obtained by the $(i-1)^{th}$ device by completing the $(j-1)^{th}$ time of model training; and the $i^{th}$ device updates the model $M_{i,j-1}$ based on the first gradient.

Optionally, in some embodiments, when i=M, the first gradient is determined based on the obtained result and a label received from the $1^{st}$ device; or

when i≠M, the first gradient is determined based on the second gradient transmitted by an $(i+1)^{th}$ device.

For a process of intra-group model training, refer to related content in the method 400. Details are not described herein again.

Optionally, in some embodiments, the rotating model parameters of the M devices includes:

sequentially exchanging a model parameter of the $i^{th}$ device in the M devices and a model parameter of the $1^{st}$ device.

In this embodiment of this application, for a $j^{th}$ time of model training, the model parameter of the $i^{th}$ device in the M devices and the model parameter of the $1^{st}$ device may be sequentially exchanged.

Refer to FIG. 9. After a submodel 0, a submodel 1, a submodel 2, and a submodel 3 are trained and updated once by the device 0, the device 1, the device 2, and the device 3, a submodel 0', a submodel 1', a submodel 2', and a submodel 3' are obtained. Before a $2^{nd}$ time of training is performed, model parameters of the device 1 and the device 0 may be exchanged first. In this case, the device 1 obtains a model parameter of the submodel 0', and the device 0 obtains a model parameter of the submodel 1'. The submodel 0', the submodel 1', the submodel 2', and the submodel 3' are updated based on the exchanged model parameters, to obtain updated submodels obtained after the $2^{nd}$ time of training is completed. Before a $3^{rd}$ time of training is performed, model parameters of the device 2 and the device 1 may be exchanged, and the updated submodels obtained through the $2^{nd}$ time of training are updated based on the exchanged model parameters, to obtain updated submodels obtained after the $3^{rd}$ time of training is completed. Before a $4^{th}$ time of training is performed, model parameters of the device 3 and the device 2 may be exchanged, and the updated submodels obtained through the $3^{rd}$ time of training are updated based on the exchanged model parameters, to finally obtain updated submodels obtained after the $4^{th}$ time of training is completed.

Optionally, in some embodiments, that the target device performs fusion on K groups of models includes:

The target device performs inter-group fusion on a $q^{th}$ model in each of the K groups of models according to a fusion algorithm, where q e [1, M].

Optionally, in some embodiments, the method 1200 further includes the following step:

sequentially exchanging a sample quantity locally stored in the $i^{th}$ device in the M devices and a sample quantity locally stored in the $1^{st}$ device.

The target device receives a sample quantity sent by the $k^{th}$ group of devices, where the sample quantity includes a sample quantity currently stored in the $k^{th}$ group of devices and a sample quantity obtained by exchanging with at least one other device in the $k^{th}$ group of devices.

That the target device performs inter-group fusion on a $q^{th}$ model in each of the K groups of models according to a fusion algorithm includes:
The target device performs inter-group fusion on the $q^{th}$ model in each of the K groups of models based on the sample quantity and according to the fusion algorithm.

For specific content of fusing the K groups of models by the target device, refer to related content in the method 400. Details are not described again.

Optionally, in some embodiments, the method 1200 further includes the following step:
For a next time of training following the n*M times of model training, the M devices obtain information about a model $M_{\langle r \rangle}$ from the target device, where the model $M_{\langle r \rangle}$ is an $r^{th}$ model obtained by the target device by performing inter-group fusion on the model $M^k_{n*M}$, r traverses from 1 to M, the model $M^k_{n*M}$ is a model obtained by the M devices in the $k^{th}$ group of devices by completing an $(n*M)^{th}$ times of model training, i traverses from 1 to M, and k traverses from 1 to K.

Optionally, in some embodiments, the method 1200 further includes the following steps:

The target device receives status information reported by N devices, where the N devices include M devices included in each group of devices in the K groups of devices;
the target device selects, based on the status information, the M devices included in each group of devices in the K groups of devices from the N devices; and
the target device broadcasts a selection result to the M devices included in each group of devices in the K groups of devices.

For the M devices in the $k^{th}$ group of devices:
The M devices receive a selection result sent by the target device.

That the M devices obtain information about a model $M_{\langle r \rangle}$ from the target device includes:
The M devices correspondingly obtain the information about $M_{\langle r \rangle}$ from the target device based on the selection result.

Optionally, in some embodiments, the selection result includes at least one of the following:
a selected device, a grouping status, or information about a model.

Optionally, in some embodiments, the information about the model includes:
a model structure of the model, a model parameter of the model, a fusion round period, and a total quantity of fusion rounds.

Optionally, in some embodiments, the status information includes at least one of the following information:
device computing power, a storage capability, resource usage, an adjacent matrix, and a hyperparameter.

For specific content of selecting the K groups of devices by the target device, refer to related content in the method 400. Details are not described again.

It should be noted that the values shown in the foregoing embodiments are merely examples for description, may alternatively be other values, and should not constitute a special limitation on this application.

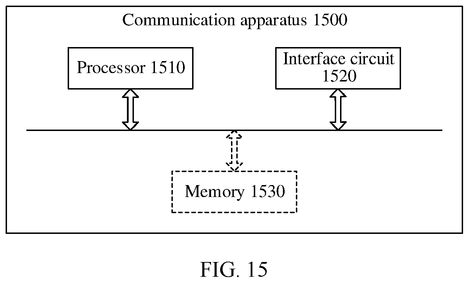

FIG. 14 and FIG. 15 are schematic diagrams of structures of possible communication apparatuses according to embodiments of this application. These communication apparatuses can implement functions of the terminal device or the network device in the foregoing method embodiments, and therefore can also achieve advantageous effects of the foregoing method embodiments. In embodiments of this application, the communication apparatus may be the terminal device 30 or 40 shown in FIG. 1, may be the network device 10 or the network device 20 shown in FIG. 1, or may be a module (for example, a chip) used in the terminal device or the network device.

FIG. 14 is a schematic diagram of a structure of a communication apparatus 1000 according to an embodiment of this application. The apparatus 1000 may include a processing module 1010 and a transceiver module 1020.

When the communication apparatus 1000 is configured to implement a function of the $i^{th}$ device in the method embodiment in FIG. 4, the processing module 1010 is configured to perform n*M times of model training, where the $i^{th}$ device completes model parameter exchange with at least one other device in the $k^{th}$ group of devices in every M times of model training, M is a quantity of devices in the $k^{th}$ group of devices, M is greater than or equal to 2, and n is an integer. The transceiver module 1020 is configured to send a model $M_{i,n*M}$ to a target device, where the model $M_{i,n*M}$ is a model obtained by the $i^{th}$ device by completing the n*M times of model training.

Optionally, in some embodiments, the target device is a device with highest computing power in the $k^{th}$ group of devices;

the target device is a device with a smallest communication delay in the $k^{th}$ group of devices; or
the target device is a device specified by a device other than the $k^{th}$ group of devices.

Optionally, in some embodiments, the processing module 1010 is specifically configured to:

for a $j^{th}$ time of model training in the n*M times of model training, receive a result obtained through inference by an $(i-1)^{th}$ device from the $(i-1)^{th}$ device;
determine a first gradient and a second gradient based on the received result, where the first gradient is for updating a model $M_{i,j-1}$, the second gradient is for updating a model $M_{i-1,j-1}$, the model $M_{i,j-1}$ is a model obtained by the $i^{th}$ device by completing a (j-1)th time of model training, and $M_{i-1,j-1}$ is a model obtained by the (i-1)th device by completing the (j-1)th time of model training; and

train the model $M_{i,j-1}$ based on the first gradient.

Optionally, in some embodiments, when i=M, the first gradient is determined based on the received inference result and a label received from a 1st device; or when i≠M, the first gradient is determined based on the second gradient transmitted by an (i+1)th device.

Optionally, in some embodiments, the processing module 1010 is further configured to:

when completing model parameter exchange with the at least one other device in the kth group of devices, exchange a locally stored sample quantity with the at least one other device in the kth group of devices.

Optionally, in some embodiments, the processing module 1010 is further configured to:

for a next time of training following the n*M times of model training, obtain information about a model $M_{\langle r\rangle}$ from the target device, where the model $M_{\langle r\rangle}$ is an rth model obtained by the target device by performing inter-group fusion on the model $M^k_{i,n*M}$, $r \in [1, M]$, the model $M^k_{i,n*M}$ is a model obtained by the ith device in the kth group of devices by completing the n*M times of model training, i traverses from 1 to M, and k traverses from 1 to K.

Optionally, in some embodiments, the transceiver module 1020 is further configured to:

receive a selection result sent by the target device.

The processing module 1010 is further configured to:

obtain the information about the model $M_{\langle r\rangle}$ from the target device based on the selection result.

Optionally, in some embodiments, the selection result includes at least one of the following:

a selected device, a grouping status, or information about a model.

Optionally, in some embodiments, the information about the model includes:

a model structure of the model, a model parameter of the model, a fusion round period, and a total quantity of fusion rounds.

When the communication apparatus 1000 is configured to implement a function of the target device in the method embodiment in FIG. 4, the transceiver module 1020 is configured to receive a model $M^k_{i,n*M}$ sent by an ith device in a kth group of devices in K groups of devices, where the model $M^k_{i,n*M}$ is a model obtained by the ith device in the kth group of devices by completing n*M times of model training, a quantity of devices included in each group of devices is M, M is greater than or equal to 2, n is an integer, i traverses from 1 to M, and k traverses from 1 to K. The processing module 1010 is configured to perform inter-group fusion on K groups of models, where the K groups of models include K models $M^k_{i,n*M}$.

Optionally, in some embodiments, the target device is a device with highest computing power in the K group of devices;

the target device is a device with a smallest communication delay in the K group of devices; or
the target device is a device specified by a device other than the K group of devices.

Optionally, in some embodiments, the processing module 1010 is specifically configured to:
perform inter-group fusion on a qth model in each of the K groups of models according to a fusion algorithm, where $q \in [1, M]$.

Optionally, in some embodiments, the transceiver module 1020 is further configured to:
receive a sample quantity sent by the ith device in the kth group of devices, where the sample quantity includes a sample quantity currently stored in the ith device and a sample quantity obtained by exchanging with at least one other device in the kth group of devices; and

The processing module 1010 is specifically configured to:
perform inter-group fusion on a qth model in each of the K groups of models based on the sample quantity and according to the fusion algorithm.

Optionally, in some embodiments, the transceiver module 1020 is further configured to:
receive status information reported by N devices, where the N devices include M devices included in each group of devices in the K groups of devices;

The processing module 1010 is further configured to:
select, based on the status information, the M devices included in each group of devices in the K groups of devices from the N devices.

The transceiver module 1020 is further configured to:
broadcast a selection result to the M devices included in each group of devices in the K groups of devices.

Optionally, in some embodiments, the selection result includes at least one of the following:
a selected device, a grouping status, or information about a model.

Optionally, in some embodiments, the information about the model includes:
a model structure of the model, a model parameter of the model, a fusion round period, and a total quantity of fusion rounds.

Optionally, in some embodiments, the status information includes at least one of the following information:
device computing power, a storage capability, resource usage, an adjacent matrix, and a hyperparameter.

For more detailed descriptions of the processing module 1010 and the transceiver module 1020, refer to related descriptions in the foregoing method embodiments. Details are not described herein again.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, or store input data required by the processor 1510 to run instructions, or store data generated after the processor 1510 runs instructions.

When the communication apparatus 1500 is configured to implement the method in the foregoing method embodiment, the processor 1510 is configured to perform a function of the processing module 1010, and the interface circuit 1520 is configured to perform a function of the transceiver module 1020.

When the communication apparatus is a chip used in a terminal device, the chip in the terminal device implements the functions of the terminal device in the foregoing method embodiments. The chip of the terminal device receives information from another module (for example, a radio frequency module or an antenna) in the terminal device, where the information is sent by a network device to the terminal device; or the chip of the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip of the network device receives information from another module (for example, a radio frequency module or an antenna) in the network device, where the information is sent by a terminal device to the network device; or the chip of the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may alternatively exist in the access network device or the terminal device as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, or other programmable apparatuses. The computer programs or the instructions may be stored in the computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape, may be an optical medium, for example, a digital versatile disc (digital versatile disc, DVD), or may be a semiconductor medium, for example, a solid state drive (solid state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. A model training method, comprising:

   performing, by an $i^{th}$ device in a $k^{th}$ group of devices, n*M times of model training, wherein the $i^{th}$ device completes model parameter exchange with at least one other device in the $k^{th}$ group of devices in every M times of model training, M is a quantity of devices in the $k^{th}$ group of devices, M is greater than or equal to 2, and n is an integer; and
   sending, by the $i^{th}$ device, a model $M_{i,n*M}$ to a target device, wherein the model $M_{i,n*M}$ is a model obtained by the $i^{th}$ device by completing the n*M times of model training.

2. The method according to claim 1, wherein the target device is a device with highest computing power in the $k^{th}$ group of devices;

   the target device is a device with a smallest communication delay in the $k^{th}$ group of devices; or
   the target device is a device specified by a device other than the $k^{th}$ group of devices.

3. The method according to claim 1 or 2, wherein the performing, by an $i^{th}$ device in a $k^{th}$ group of devices, n*M times of model training comprises:

   for a $j^{th}$ time of model training in the n*M times of model training, receiving, by the $i^{th}$ device, a result obtained through inference by an $(i-1)^{th}$ device from the $(i-1)^{th}$ device;
   determining, by the $i^{th}$ device, a first gradient and a second gradient based on the received result, wherein the first gradient is for updating a model $M_{i,j-1}$ , the second gradient is for updating a model $M_{i-1,j-1}$, the model $M_{i,j-1}$ is a model obtained by the $i^{th}$ device by completing a $(j-1)^{th}$ time of model training, and the model $M_{i-1,j-1}$ is a model obtained by the $(i-1)^{th}$ device by completing the $(j-1)^{th}$ time of model training; and training, by the $i^{th}$ device, the model $M_{i,j-1}$ based on the first gradient.

4. The method according to claim 3, wherein when i=M, the first gradient is determined based on the received inference result and a label received from a $1^{st}$ device; or
   when i≠M, the first gradient is determined based on the second gradient transmitted by an $(i+1)^{th}$ device.

5. The method according to any one of claims 1 to 4, wherein the method further comprises:
   when the $i^{th}$ device completes model parameter exchange with the at least one other device in the $k^{th}$ group of devices, exchanging, by the $i^{th}$ device, a locally stored sample quantity with the at least one other device in the $k^{th}$ group of devices.

6. The method according to any one of claims 1 to 5, wherein the method further comprises:
   for a next time of training following the n*M times of model training, obtaining, by the $i^{th}$ device, information about a model $M_{\langle r \rangle}$ from the target device, wherein the model $M_{\langle r \rangle}$ is an $r^{th}$ model obtained by the target device by performing inter-group fusion on the model $M_{i,n*M}^{k}$ , $r \in [1,M]$, the model $M_{i,n*M}^{k}$ is a model obtained by the $i^{th}$ device in the $k^{th}$ group of devices by completing the n*M times of model training, i traverses from 1 to M, and k traverses from 1 to K.

7. The method according to claim 6, wherein the method further comprises:

   receiving, by the $i^{th}$ device, a selection result sent by the target device; and
   the obtaining, by the $i^{th}$ device, information about a model $M_{\langle r \rangle}$ from the target device comprises:
   obtaining, by the $i^{th}$ device, the information about the model $M_{\langle r \rangle}$ from the target device based on the selection result.

8. The method according to claim 7, wherein the selection result comprises at least one of the following:
   a selected device, a grouping status, or information about a model.

9. The method according to any one of claims 1 to 8, wherein the information of the model comprises:
   a model structure of the model, a model parameter of the model, a fusion round period, and a total quantity of fusion rounds.

10. A model training method, comprising:

receiving, by a target device, a model $M_{i,n*M}^{k}$ sent by an $i^{th}$ device in a $k^{th}$ group of devices in K groups of devices, wherein the model $M_{i,n*M}^{k}$ is a model obtained by the $i^{th}$ device in the $k^{th}$ group of devices by completing n*M times of model training, a quantity of devices comprised in each group of devices is M, M is greater than or equal to 2, n is an integer, i traverses from 1 to M, and k traverses from 1 to K; and
performing, by the target device, inter-group fusion on K groups of models, wherein the K groups of models comprise K models $M_{i,n*M}^{k}$ .

11. The method according to claim 10, wherein the target device is a device with highest computing power in the K group of devices;

the target device is a device with a smallest communication delay in the K group of devices; or
the target device is a device specified by a device other than the K group of devices.

12. The method according to claim 10 or 11, wherein the performing, by the target device, fusion on K groups of models comprises:
performing, by the target device, inter-group fusion on a $q^{th}$ model in each of the K groups of models according to a fusion algorithm, wherein $q \in [1,M]$.

13. The method according to any one of claims 10 to 12, wherein the method further comprises:

receiving, by the target device, a sample quantity sent by the $i^{th}$ device in the $k^{th}$ group of devices, wherein the sample quantity comprises a sample quantity currently stored in the $i^{th}$ device and a sample quantity obtained by exchanging with at least one other device in the $k^{th}$ group of devices; and
the performing, by the target device, inter-group fusion on a $q^{th}$ model in each of the K groups of models according to a fusion algorithm comprises:
performing, by the target device, inter-group fusion on the $q^{th}$ model in each of the K groups of models based on the sample quantity and according to the fusion algorithm.

14. The method according to any one of claims 10 to 13, wherein the method further comprises:

receiving, by the target device, status information reported by N devices, wherein the N devices comprise M devices comprised in each group of devices in the K groups of devices;
selecting, by the target device based on the status information, the M devices comprised in each group of devices in the K groups of devices from the N devices; and
broadcasting, by the target device, a selection result to the M devices comprised in each group of devices in the K groups of devices.

15. The method according to claim 14, wherein the selection result comprises at least one of the following:
a selected device, a grouping status, or information about a model.

16. The method according to claim 15, wherein the information about the model comprises:
a model structure of the model, a model parameter of the model, a fusion round period, and a total quantity of fusion rounds.

17. The method according to any one of claims 14 to 16, wherein the status information comprises at least one of the following information:
device computing power, a storage capability, resource usage, an adjacent matrix, and a hyperparameter.

18. A model training method, comprising:

updating, by M devices in a $k^{th}$ group of devices, M models $M_{j-1}$ based on information about the M models $M_{j-1}$ to obtain M models $M_j$, wherein j is an integer greater than or equal to 1;
rotating model parameters of the M devices;
updating the M models $M_j$ based on M devices obtained through the rotation, to obtain M models $M_{j+1}$ ; and
when j+1=n*M, and n is a positive integer, sending, by the M devices, M models $M_{n*M}$ to a target device.

19. The method according to claim 18, wherein the target device is a device with highest computing power in the M devices;

the target device is a device with a smallest communication delay in the M devices; or
the target device is a device specified by a device other than the M devices.

20. The method according to claim 18 or 19, wherein the updating, by M devices in a $k^{th}$ group of devices, M models $M_{j-1}$ based on information about the M models $M_{j-1}$ comprises:

performing, by a 1st device in the kth group of devices, inference on a model $M_{1,j-1}$ based on locally stored data, wherein the model $M_{1,j-1}$ represents a model obtained by the 1st device by completing a (j-1)th time of model training; obtaining, by an ith device in the kth group of devices, a result of inference performed by an (i-1)th device, wherein $i \in (1,M]$; determining, by the ith device, a first gradient and a second gradient based on the obtained result, wherein the first gradient is for updating a model $M_{i,j-1}$, the second gradient is for updating a model $M_{i-1,j-1}$, the model $M_{1,j-1}$ is a model obtained by the ith device by completing the (j-1)th time of model training, and the model $M_{i-1,j-1}$ is a model obtained by the (i-1)th device by completing the (j-1)th time of model training; and updating, by the ith device, the model $M_{i,j-1}$ based on the first gradient.

21. The method according to claim 20, wherein when i=M, the first gradient is determined based on the obtained result and a label received from the 1st device; or
when i≠M, the first gradient is determined based on the second gradient transmitted by an (i+1)th device.

22. The method according to any one of claims 18 to 21, wherein the rotating model parameters of the M devices comprises:
sequentially exchanging a model parameter of the ith device in the M devices and a model parameter of the 1st device.

23. The method according to any one of claims 18 to 22, wherein the method further comprises:
sequentially exchanging a sample quantity locally stored in the ith device in the M devices and a sample quantity locally stored in the 1st device.

24. The method according to any one of claims 18 to 23, wherein the method further comprises:
for a next time of training following the n*M times of model training, obtaining, by the M devices, information about a model $M_{\langle r \rangle}$ from the target device, wherein the model $M_{\langle r \rangle}$ is an rth model obtained by the target device by performing inter-group fusion on the model $M^{k}_{n*M}$, r traverses from 1 to M, the model $M^{k}_{n*M}$ is a model obtained by the M devices in the kth group of devices by completing an (n*M)th times of model training, i traverses from 1 to M, and k traverses from 1 to K.

25. The method according to claim 24, wherein the method further comprises:

receiving, by the M devices, a selection result sent by the target device; and
the obtaining, by the M devices, information about a model $M_{\langle r \rangle}$ from the target device comprises:
correspondingly obtaining, by the M devices, the information about the model $M_{\langle r \rangle}$ from the target device based on the selection result.

26. The method according to claim 25, wherein the selection result comprises at least one of the following: a selected device, a grouping status, or information about a model.

27. The method according to any one of claims 18 to 26, wherein the information of the model comprises:
a model structure of the model, a model parameter of the model, a fusion round period, and a total quantity of fusion rounds.

28. A model training method, comprising:

receiving, by a target device, M models $M^{k}_{n*M}$ sent by M devices in a kth group of devices in K groups of devices, wherein the model $M^{k}_{n*M}$ is a model obtained by the M devices in the kth group of devices by completing an (n*M)th time of model training, M is greater than or equal to 2, and k traverses from 1 to K; and
performing, by the target device, inter-group fusion on K groups of models, wherein the K groups of models comprise the M models $M^{k}_{n*M}$.

29. The method according to claim 28, wherein the target device is a device with highest computing power in the M devices;

the target device is a device with a smallest communication delay in the M devices; or
the target device is a device specified by a device other than the M devices.

30. The method according to claim 28 or 29, wherein the performing, by the target device, fusion on K groups of models comprises:
performing, by the target device, inter-group fusion on a qth model in each of the K groups of models according to a fusion algorithm, wherein $q \in [1,M]$.

31. The method according to any one of claims 28 to 30, wherein the method further comprises:

receiving, by the target device, a sample quantity sent by the kth group of devices, wherein the sample quantity comprises a sample quantity currently stored in the $k^{th}$ group of devices and a sample quantity obtained by exchanging with at least one other device in the $k^{th}$ group of devices;

the performing, by the target device, inter-group fusion on a $q^{th}$ model in each of the K groups of models according to a fusion algorithm comprises:

performing, by the target device, inter-group fusion on the $q^{th}$ model in each of the K groups of models based on the sample quantity and according to the fusion algorithm.

32. The method according to any one of claims 28 to 31, wherein the method further comprises:

receiving, by the target device, status information reported by N devices, wherein the N devices comprise M devices comprised in each group of devices in the K groups of devices; selecting, by the target device based on the status information, the M devices comprised in each group of devices in the K groups of devices from the N devices; and broadcasting, by the target device, a selection result to the M devices comprised in each group of devices in the K groups of devices.

33. The method according to claim 32, wherein the selection result comprises at least one of the following: a selected device, a grouping status, or information about a model.

34. The method according to claim 33, wherein the information about the model comprises: a model structure of the model, a model parameter of the model, a fusion round period, and a total quantity of fusion rounds.

35. The method according to any one of claims 28 to 34, wherein the status information comprises at least one of the following information: device computing power, a storage capability, resource usage, an adjacent matrix, and a hyperparameter.

36. A communication apparatus, comprising:

a processing module, configured to perform $n*M$ times of model training, wherein the $i^{th}$ device completes model parameter exchange with at least one other device in the $k^{th}$ group of devices in every M times of model training, M is a quantity of devices in the $k^{th}$ group of devices, M is greater than or equal to 2, and n is an integer; and a transceiver module, configured to send a model $M_{i,n*M}$ to a target device, wherein the model

$M_{i,n*M}$ is a model obtained by the $i^{th}$ device by completing the $n*M$ times of model training.

37. The apparatus according to claim 36, wherein the target device is a device with highest computing power in the $k^{th}$ group of devices;

the target device is a device with a smallest communication delay in the $k^{th}$ group of devices; or the target device is a device specified by a device other than the $k^{th}$ group of devices.

38. The apparatus according to claim 36 or 37, wherein the processing module is further configured to:

for a $j^{th}$ time of model training in the $n*M$ times of model training, receive, by the $i^{th}$ device, a result obtained through inference by an $(i-1)^{th}$ device from the $(i-1)^{th}$ device; determine, by the $i^{th}$ device, a first gradient and a second gradient based on the received result, wherein the first gradient is for updating a model $M_{i,j-1}$, the second gradient is for updating a model $M_{i-1,j-1}$, the model $M_{1,j-1}$ is a model obtained by the $i^{th}$ device by completing a $(j-1)^{th}$ time of model training, and the model $M_{i-1,j-1}$ is a model obtained by the $(i-1)^{th}$ device by completing the $(j-1)^{th}$ time of model training; and train, by the $i^{th}$ device, the model $M_{i,j-1}$ based on the first gradient.

39. The apparatus according to claim 38, wherein when i=M, the first gradient is determined based on the received inference result and a label received from a $1^{st}$ device; or when i≠M, the first gradient is determined based on the second gradient transmitted by an $(i+1)^{th}$ device.

40. The apparatus according to any one of claims 36 to 39, wherein the processing module is further configured to: when completing model parameter exchange with the at least one other device in the $k^{th}$ group of devices, exchange a locally stored sample quantity with the at least one other device in the $k^{th}$ group of devices.

41. The apparatus according to any one of claims 36 to 40, wherein the processing module is further configured to: for a next time of training following the $n*M$ times of model training, obtain information about a model $M_{\langle r \rangle}$ from the target device, wherein the model $M_{\langle r \rangle}$ is an $r^{th}$ model obtained by the target device by performing inter-group fusion on the model $M^{k}_{i,n*M}$, $r \in [1, M]$,

the model $M^k_{i,n*M}$ is a model obtained by the i$^{th}$ device in the k$^{th}$ group of devices by completing the n*M times of model training, i traverses from 1 to M, and k traverses from 1 to K.

42. The apparatus according to claim 41, wherein

the transceiver module is further configured to receive a selection result sent by the target device; and
the processing module is further configured to obtain the information about the model $M_{\langle r \rangle}$ from the target device based on the selection result.

43. The apparatus according to claim 42, wherein the selection result comprises at least one of the following:
a selected device, a grouping status, or information about a model.

44. The apparatus according to any one of claims 36 to 43, wherein the information of the model comprises:
a model structure of the model, a model parameter of the model, a fusion round period, and a total quantity of fusion rounds.

45. A communication apparatus, comprising:

a transceiver module, configured to receive a model $M^k_{i,n*M}$ sent by an i$^{th}$ device in a k$^{th}$ group of devices in K groups of devices, wherein the model $M^k_{i,n*M}$ is a model obtained by the i$^{th}$ device in the k$^{th}$ group of devices by completing n*M times of model training, a quantity of devices comprised in each group of devices is M, M is greater than or equal to 2, n is an integer, i traverses from 1 to M, and k traverses from 1 to K; and
a processing module, configured to perform inter-group fusion on K groups of models, wherein the K groups of models comprise K models $M^k_{i,n*M}$.

46. The apparatus according to claim 45, wherein the target device is a device with highest computing power in the K group of devices;

the target device is a device with a smallest communication delay in the K group of devices; or
the target device is a device specified by a device other than the K group of devices.

47. The apparatus according to claim 45 or 46, wherein the processing module is further configured to:
perform inter-group fusion on a q$^{th}$ model in each of the K groups of models according to a fusion algorithm, wherein $q \in [1, M]$.

48. The apparatus according to any one of claims 45 to 47, wherein
the transceiver module is further configured to:

receive a sample quantity sent by the i$^{th}$ device in the k$^{th}$ group of devices, wherein the sample quantity comprises a sample quantity currently stored in the i$^{th}$ device and a sample quantity obtained by exchanging with at least one other device in the k$^{th}$ group of devices; and
the processing module is further configured to:
perform inter-group fusion on the q$^{th}$ model in each of the K groups of models based on the sample quantity and according to the fusion algorithm.

49. The apparatus according to any one of claims 45 to 48, wherein

the transceiver module is further configured to receive status information reported by N devices, wherein the N devices comprise M devices comprised in each group of devices in the K groups of devices;
the processing module is further configured to select, based on the status information, the M devices comprised in each group of devices in the K groups of devices from the N devices; and
the transceiver module is further configured to broadcast a selection result to the M devices comprised in each group of devices in the K groups of devices.

50. The apparatus according to claim 49, wherein the selection result comprises at least one of the following:
a selected device, a grouping status, or information about a model.

51. The apparatus according to claim 50, wherein the information about the model comprises:
a model structure of the model, a model parameter of the model, a fusion round period, and a total quantity of fusion rounds.

52. The apparatus according to any one of claims 45 to 51, wherein the status information comprises at least one of the following information:
device computing power, a storage capability, resource usage, an adjacent matrix, and a hyperparameter.

**53.** A communication apparatus, comprising a processor and a communication interface, wherein the communication interface is configured to: receive a signal from another communication apparatus different from the communication apparatus and transmit the signal to the processor, or send a signal from the processor to another communication apparatus different from the communication apparatus, and the processor is configured to implement the method according to any one of claims 1 to 9 by using a logic circuit or executing code instructions, the processor is configured to implement the method according to any one of claims 10 to 17 by using a logic circuit or executing code instructions, the processor is configured to implement the method according to any one of claims 18 to 27 by using a logic circuit or executing code instructions, or the processor is configured to implement the method according to any one of claims 28 to 35 by using a logic circuit or executing code instructions.

**54.** A computer-readable storage medium, wherein the computer-readable storage medium stores a computer program; and when the computer program is run, the method according to any one of claims 1 to 9, the method according to any one of claims 10 to 17, the method according to any one of claims 18 to 27, or the method according to any one of claims 28 to 35 is implemented.

**55.** A chip system, comprising a processor, wherein the processor is configured to read and execute a computer program stored in a memory, to perform the method according to any one of claims 1 to 9, the method according to any one of claims 10 to 17, the method according to any one of claims 18 to 27, the method according to any one of claims 28 to 35.

**56.** A computer program product, wherein the computer program product comprises computer program code; and when the computer program code is run, the method according to any one of claims 1 to 9 is performed, the method according to any one of claims 10 to 17 is performed, the method according to any one of claims 18 to 27 is performed, or the method according to any one of claims 28 to 35 is performed.

**57.** A communication system, comprising a first device and a second device, wherein the first device is configured to perform the method according to any one of claims 1 to 9, and the second device is configured to perform the method according to any one of claims 10 to 17.

System 100

FIG. 1

FIG. 2

FIG. 3

400

| i$^{th}$ device | | Target device |

S410. The i$^{th}$ device in a k$^{th}$ group of devices performs n*M times of model training

S420. Send a model $M_{i,n*M}$ to the target device

S430. Receive a model $M_{i,n*M}^{k}$ sent by the i$^{th}$ device in the k$^{th}$ group of devices in K groups of devices

S440. Perform inter-group fusion on K groups of models, where the K groups of models include K models $M_{i,n*M}^{k}$

FIG. 4

b

w

$x_1$

$x_2$

$x_3$

$x_4$

$y_1$

$y_2$

$y_3$

$y_4$

$y_5$

$y_6$

FIG. 5

FIG. 6

FIG. 7

First group of
devices

| Device 0 | Device 1 | Device 2 | Device 3 |

Second group
of devices

| Device 4 | Device 5 | Device 6 | Device 7 |

Third group
of devices

| Device 8 | Device 9 | Device 10 | Device 11 |

FIG. 8

Submodel 0　　Submodel 1　　Submodel 2　　Submodel 3

1st time of
training

| Device 0 | Device 1 | Device 2 | Device 3 |

2nd time of
training

| Device 1 | Device 0 | Device 2 | Device 3 |

3rd time of
training

| Device 2 | Device 0 | Device 1 | Device 3 |

4th time of
training

| Device 3 | Device 0 | Device 1 | Device 2 |

FIG. 9

|  | Submodel 0 | Submodel 1 | Submodel 2 | Submodel 3 |
|---|---|---|---|---|
| 1st time of training | Device 0 | Device 1 | Device 2 | Device 3 |
| 2nd time of training | Device 3 | Device 1 | Device 2 | Device 0 |
| 3rd time of training | Device 2 | Device 1 | Device 3 | Device 0 |
| 4th time of training | Device 1 | Device 2 | Device 3 | Device 0 |

FIG. 10

FIG. 11

1100

| N devices | | Target device |

S1110. Report status information to the
target device

S1120. Determine a selection result
based on the status information

S1130. Broadcast the selection result

S1140. Report status information to the
target device

S1150. Determine a selection result
based on the status information

S1160. Broadcast the selection result

FIG. 12

1200

| $k^{th}$ group of devices | | Target device |

S1210. M devices in the $k^{th}$ group of devices update M models $M_{j-1}$ based on information about the M models $M_{j-1}$, to obtain M models $M_j$

S1220. Rotate model parameters of the M devices

S1230. Update the M models $M_j$ based on M devices obtained through the rotation, to obtain M models $M_{j+1}$

S1240. When j+1=n*M, and n is a positive integer, send M models $M_{n*M}$ to the target device

S1250. Receive M models $M_{n*M}^{k}$ sent by the M devices in the $k^{th}$ group of devices in K groups of devices

S1260. Perform inter-group fusion on K groups of models, where the K groups of models include the M models $M_{n*M}^{k}$

FIG. 13

1010 — Processing module

1000

1020 — Transceiver module

FIG. 14

Communication apparatus 1500

Processor 1510

Interface circuit 1520

Memory 1530

FIG. 15

## INTERNATIONAL SEARCH REPORT

| International application No. |
| --- |
| **PCT/CN2022/131437** |

**A. CLASSIFICATION OF SUBJECT MATTER**

G06N 3/08(2023.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT; CNKI; CNABS; ENTXT; DWPI; ENTXTC: 组设备, 参数, 交换, 模型训练, 组间融合, 融合, 组内, 组间, model, training, parameter, exchange, mix, group

**C. DOCUMENTS CONSIDERED TO BE RELEVANT**

| Category* | Citation of document, with indication, where appropriate, of the relevant passages | Relevant to claim No. |
| --- | --- | --- |
| X | CN 110263928 A (UNIVERSITY OF SCIENCE AND TECHNOLOGY OF CHINA) 20 September 2019 (2019-09-20) description, paragraphs [0018]-[0023] | 1-2, 9-11, 36-37, 44-46, 52-57 |
| X | CN 108304918 A (ZHONGXING FEILIU INFORMATION TECH CO., LTD.) 20 July 2018 (2018-07-20) description, paragraphs [0031]-[0051] | 1-2, 9-11, 36-37, 44-46, 52-57 |
| A | CN 109690530 A (YUAN ZHENNAN; BLOCKCHAIN COMMUNICATION NETWORK CO., LTD.) 26 April 2019 (2019-04-26) entire document | 1-57 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 January 2023** | **28 January 2023** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| | International application No. |
|---|---|
| | **PCT/CN2022/131437** |

| Patent document<br>cited in search report | Publication date<br>(day/month/year) | Patent family member(s) | Publication date<br>(day/month/year) |
|---|---|---|---|
| CN 110263928 A | 20 September 2019 | None | |
| CN 108304918 A | 20 July 2018 | None | |
| CN 109690530 A | 26 April 2019 | WO 2020107351 A1 | 04 June 2020 |

**REFERENCES CITED IN THE DESCRIPTION**

**Patent documents cited in the description**

• CN 202111350005